# EUROPEAN PATENT APPLICATION

(11) **EP 1 376 982 A2**
(43) Date of publication of application: **02.01.2004**
(21) Application number: 03013985.1
(22) Date of filing: 20.06.2003
(51) Int. Cl.: H04L 29/06

(54) **Content packet, distribution request signal, distribution program, server and terminal for media streaming**

(30) Priority: 21.06.2002 JP 2002180982; 21.05.2003 JP 2003144084
(71) Applicant: MATSUSHITA ELECTRIC INDUSTRIAL CO., LTD., Kadoma-shi, Osaka 571-8501 (JP)
(72) Inventor: Yasugi, Makoto, Tokyo 144-0046 (JP); Sugiura, Masataka, Tokyo 158-0082 (JP)
(74) Representative: Betten & Resch

(57) **Abstract**

A system makes possible the distribution of multiple streaming media data dispersed on the network to specific terminal sequentially without supervisory apparatus of servers. A server having a distribution program comprising information of streaming distribution schedule and information of a server distributing subsequently and a terminal having a detection unit detecting termination of reception of content packets distributed from a server, make it possible to receive and play back media data stored in multiple terminals as sequential media data.

## Description

### BACKGROUND OF THE INVENTION

### Field of the Invention

The present invention relates to a server and a terminal, and the content packet, and distribution signal transmitted and received between these devices. Furthermore, it relates to distribution program for controlling a server. The present invention especially relates to streaming distribution of data.

### Description of the Related Art

As broadband access lines proliferate, demand for streaming distribution of images and sounds through the internet grows.

However, on-demand media is distributed through the internet in response to a request of a terminal differently from ground-based broadcasting. Therefore it makes it impossible for the distribution side to continuously control the distribution of media content distributed from different servers to a specific terminal. Moreover, in cases where media contents managed in different servers are distributed to a specific terminal, it is necessary that media data is distributed and allocated (see, for example, official bulletin on Japan Patent Laid Open No. H10-271447) and it is necessary that supervisory apparatus of servers, which may be called distribution managing server, managing servers are placed in between servers (for example, official bulletin on Japan Patent Laid Open No. H11-187340). For example, it is necessary to process several of ten seconds of advertisement data distributed with certainty before image data requested from a terminal is distributed by streaming distribution.

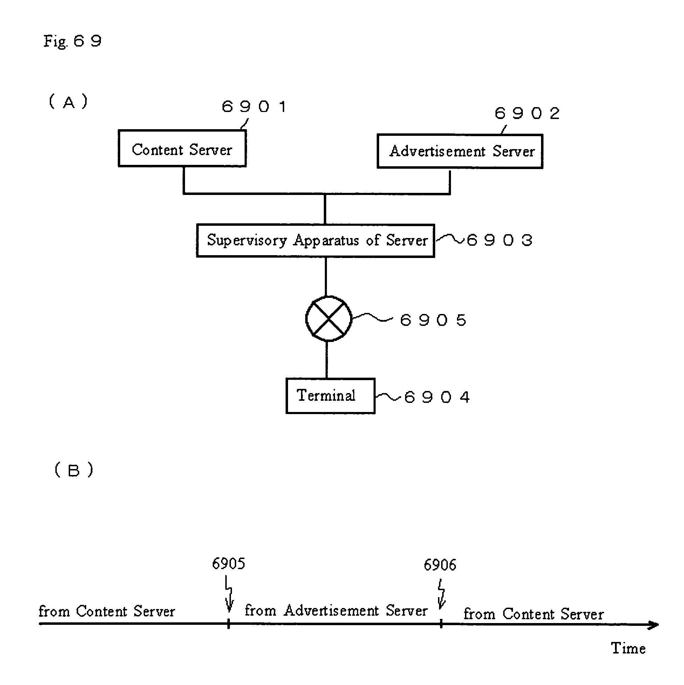

Fig. 69(A) illustrates an example of a conventional system wherein advertisement data is interleaved and distributed during distribution of the media content. In Fig. 69 content server 6901 provides a content to which an advertisement is interleaved (for example, image streaming data) while advertisement server 6902 provides the advertisement content to be interleaved during distribution. Supervisory apparatus of servers 6903 controls streaming media distribution from content server 6901 and advertisement server 6902 to terminal 6904.

In cases where terminal 6904 transmits a distribution request signal to request streaming media data stored in content server 6901, the intermediate supervisory apparatus of servers 6903 receives that distribution request signal. Supervisory apparatus of servers 6903 determines that terminal 6904 requests content stored in content server 6901 and transmits content from content server 6901 to terminal 6904. In cases where a predetermined time passes or a predetermined condition is attained, supervisory apparatus of servers 6903 stops content server 6901 from transmitting content and starts advertisement server 6902 transmitting content, then transmits the advertisement content to terminal 6904. In cases where the distribution of the advertisement content has been completed, supervisory apparatus of servers 6903 restarts content server 6901 transmitting contents.

By a process such as the supervisory apparatus of servers 6903, illustrated in Fig. 69 (B), content is distributed from content server 6901 by time 6905 and distribution is stopped at time 6905. Content distributed from advertisement server 6902 is interleaved from time 6905 to time 6906 and distribution of content stopped at time 6905 is restarted to be distributed at Time 6906.

### SUMMARY OF THE INVENTION

The problems of a system such as the above-mentioned can be resolved by the present invention. Firstly, a lot of distribution is concentrated in the supervisory apparatus of servers, thereby causing an increase in the communication load and deterioration of quality. Moreover, it is necessary to register a new server to the supervisory apparatus of servers in advance when a new server is added to distribute new media content.

Accordingly, it is an object of the present invention to provide a distribution system making it possible to distribute multiple streaming media contents distributed on the network sequentially by a simpler method to a specific terminal without supervisory apparatus of servers etc.

In the present invention, in order to solve the above deficiency, content packet distributed from a server to a terminal includes information of content to be distributed subsequently in addition to information for composing content distributed presently.

Thereby a terminal can request distribution of content to be distributed subsequently when stoppage of distribution content is detected.

In a still further aspect of the present invention, information about content to be distributed after subsequent distributions may be included in the content packet.

The content being distributed currently is specified as the content to be distributed after subsequent distributions and advertisement content is specified as the content to be distributed subsequently. Thereby a terminal can request distribution of advertisement content and can receive subsequent content of content being distributed currently.

In a still further aspect of the present invention, distribution request signal includes information about content to be distributed subsequently in addition to information about content to be distributed currently.

This enables a server to specify content, distributed in advance of advertisement content, as information about content to be distributed subsequently to content packet of advertisement content interleaved in cases where distribution request signal specifies advertisement content as content to be distributed currently and specifies content, distributed in advance of advertisement content, as content to be distributed subsequently.

In a still further aspect of the present invention, information indicating a position to start distributing content is included in a distribution program managing operation of a server in order to initiate communication between a distribution request signal and a distribution program described hereinbefore.

Thereby a start position of distribution is determined even though a start position of distribution is unspecified in a distribution request signal.

In a still further aspect of the present invention, information indicating distributed position of content to be distributed currently may be included in a distribution program.

Information indicating distributed position of content to be distributed currently is included in information of content to be distributed after subsequent distributions, thereby making it possible to start distributing subsequent content of the content being distributed currently at the end point of another content interleaved, in cases where other content is interleaved during distribution.

In a still further aspect of the present invention, information about a content requested to be distributed currently to a content to be distributed this time may be included in a distribution program.

Thereby, information about content requested to be distributed subsequently can be included in the content packet.

In a still further aspect of the present invention, information indicating an end position of content may be stored in the distribution program.

Thereby, for example, a terminal can request distribution of subsequent content at a predetermined time.

In a still further aspect of the present invention, when the start position of content to be distributed currently is included in the distribution request signal, the server starts distributing content at that position in order to initiate communication between the content packet, the distribution request signal, and the distribution program described hereinbefore.

In a still further aspect of the present invention, the server starts distributing content at a predetermined position indicated in the distribution program when the start position of content to be distributed currently in the distribution request signal is unspecified.

In a still further aspect of the present invention, the server records the distributed position to the content packet when the distribution program stores information indicating distributed position of content to be distributed currently.

In a still further aspect of the present invention, the server sets information about content to be distributed subsequently in the distribution request signal to information about content to be distributed subsequently in the content packet according to the distribution program.

In a still further aspect of the present invention, the server can select information about content to be distributed included in the content packet based on a comparison of the distribution start position of content included in the distribution request signal with the position indicated in the distribution program.

In a still further aspect of the present invention, the server sets the information about content being distributed currently to information about content to be distributed after a subsequent distribution included in content packet.

In a still further aspect of the present invention, the terminal generates information about content requested currently and information about content requested subsequently, and generates a distribution request signal based on generated information.

In a still further aspect of the present invention, the terminal generates a distribution request signal including information about content whose distribution is requested currently generated based on information about content whose distribution is requested subsequently and information about content whose distribution is requested subsequently generated based on information about content whose distribution is requested after a subsequent distribution.

In a still further aspect of the present invention, the terminal detects the reception end of content packet or detects interruption of content packet by congestion.

### BRIEF DESCRIPTION OF THE DRAWINGS

Fig. 1 is a schematic view of the present invention,
Fig. 2 is a sequence view illustrating data flow of the present invention,
Fig. 3 is a view illustrating an example of a distribution request signal of the present invention,
Fig. 4 is a view illustrating an example of a distribution program of the present invention,
Fig. 5 is a view illustrating an example of content packets of the present invention,
Fig. 6 is a view illustrating an example of a structure for detecting reception stop of content packet of the present invention,
Fig. 7 is a view illustrating an example of a distribution request signal of the present invention,
Fig. 8 is a view illustrating an example of a distribution program of the present invention,
Fig. 9 is a view illustrating an example of content packets of the present invention,
Fig. 10 is a view illustrating an example of a distribution request signal of the present invention,
Fig. 11 is a view illustrating an example of content packets of the present invention,
Fig. 12 is a view illustrating an example of a distribution request signal of the present invention,
Fig. 13 is a view illustrating an example of content packets of the present invention,
Fig. 14 is a view illustrating an example of a structure for load sharing of a server of the present invention,
Fig. 15 is a view illustrating an example of a distribution request signal of the present invention,
Fig. 16 is a view illustrating an example of content packets of the present invention,
Fig. 17 is a view illustrating an example of a distribution request signal of the present invention,
Fig. 18 is a view illustrating an example of content packets of the present invention,
Fig. 19 is a view illustrating an example of content packets of the present invention,
Fig. 20 is a view illustrating an example of a structure for load sharing of server of the present invention,
Fig. 21 is a view illustrating an example of a distribution request signal of the present invention,
Fig. 22 is a view illustrating an example of content packets of the present invention,
Fig. 23 is a block diagram of content packet relating to the first embodiment of the present invention,
Fig. 24 is a view illustrating an example of concrete structure of content packet present invention,
Fig. 25 is a flow chart of the terminal of the present invention,
Fig. 26 is a block diagram of a content packet relating to the second embodiment of the present invention,
Fig. 27 is a block diagram of content packet relating to the third embodiment of the present invention,
Fig. 28 is a view illustrating an example of a specific structure of content packet relating to the fourth embodiment of the present invention,
Fig. 29 is a view illustrating an example of the structure of a content packet relating to the seventh embodiment of the present invention,
Fig. 30 is a block diagram of a distribution request signal relating to the tenth embodiment of the present invention,
Fig. 31 is a view illustrating an example of a distribution request signal expressed by XML of the present invention,
Fig. 32 is a block diagram illustrating a distribution request signal relating to the eleventh embodiment of the present invention,
Fig. 33 is a block diagram illustrating a distribution request signal relating to the twelfth embodiment of the present invention,
Fig. 34 is a schematic view of the twelfth embodiment of the present invention,
Fig. 35 is a schematic view of the thirteenth through sixteenth embodiments of the present invention,
Fig. 36 is a block diagram of a distribution program relating to the thirteenth embodiment of the present invention,
Fig. 37 is a block diagram of a distribution program relating to the fourteenth embodiment of the present invention,
Fig. 38 is a view illustrating an example of data structure for storing distributed position information of the present invention,
Fig. 39 is a block diagram of distribution program relating to the fifteenth embodiment of the present invention,
Fig. 40 is a view illustrating an example of subsequent content information of the present invention,
Fig. 41 is a block diagram of subsequent content information in distribution program relating to the sixteenth embodiment of the present invention,
Fig. 42 is a flow chart of a server relating to the seventeenth embodiment of the present invention,
Fig. 43 is a block diagram of a server relating to the seventeenth embodiment of the present invention,
Fig. 44 is a functional block diagram of a server relating to the eighteenth embodiment of the present invention,
Fig. 45 is a flow chart of a server relating to the eighteenth embodiment of the present invention,
Fig. 46 is a functional block diagram of a server relating to the nineteenth embodiment of the present invention,
Fig. 47 is a flow chart of a server relating to the nineteenth embodiment of the present invention,
Fig. 48 is a functional block diagram of a server relating to the twentieth embodiment of the present invention,
Fig. 49 is a flow chart of a server relating to the twentieth embodiment of the present invention,
Fig. 50 is a functional block diagram of a server relating to the twenty-first embodiment of the present invention,
Fig. 51 is a flow chart of a server relating to the twenty-first embodiment of the present invention,
Fig. 52 is a functional block diagram of a server relating to the twenty-second embodiment of the present invention,
Fig. 53 is a view illustrating an example of selection process of a subsequent content information of the present invention,
Fig. 54 is a functional block diagram of a server relating to the twenty-second embodiment of the present invention,
Fig. 55 is a functional block diagram of a server relating to the twenty-third embodiment of the present invention,
Fig. 56 is a functional block diagram of a server relating to the twenty-fourth embodiment of the present invention,
Fig. 57 is a flow chart of a server relating to the twenty-fourth embodiment of the present invention,
Fig. 58 is a functional block diagram of a server relating to the twenty-fifth embodiment of the present invention,
Fig. 59 is a functional block diagram of a server relating to the twenty-sixth embodiment of the present invention,
Fig. 60 is a functional block diagram of a server relating to the twenty-seventh embodiment of the present invention,
Fig. 61 is a functional block diagram of a server relating to the twenty-eighth embodiment of the present invention,
Fig. 62 is a functional block diagram of a terminal relating to the twenty-ninth embodiment of the present invention,
Fig. 63 is a functional block diagram of a terminal relating to the thirtieth embodiment of the present invention,
Fig. 64 is a functional block diagram of a terminal relating to the thirty-first embodiment of the present invention,
Fig. 65 is a functional block diagram of a terminal relating to the thirty-second embodiment of the present invention,
Fig. 66 is a functional block diagram of a terminal relating to the thirty-third embodiment of the present invention,
Fig. 67 is a functional block diagram of a terminal relating to the thirty-fourth embodiment of the present invention,
Fig. 68 is a functional block diagram of a terminal relating to the thirty-fifth embodiment of the present invention,
Fig. 69 is a functional block diagram of a terminal relating to the thirty-sixth embodiment of the present invention.

### DETAILED DESCRIPTION OF THE PREFERRED EMBODIMENTS

The embodiments of the present invention will be described hereinafter by the use of drawings. Furthermore, there is no limitation on the present invention in these embodiments, and the present invention may be practiced in various modes without departing from the scope of it.

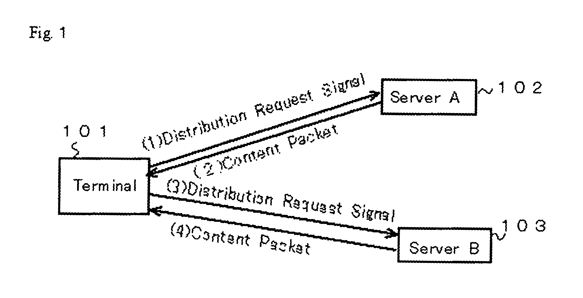

Fig. 1 is a schematic view of the present invention. In the present invention, (1) terminal 101 transmits a distribution request signal to server A (102), (2) server A transmits content packets according to a distribution request signal. This content packet includes the information about the content being distributed currently and the information about the content to be received by a terminal subsequently. Moreover, that content is stored in server B (103), (3) a terminal transmits a distribution request signal to server B (103) in order to receive the subsequent content specified by the content packet when a terminal detects a termination of communication of the content packet from the server A for any reason (For example, congestion of communication path or trouble with server A etc.), (4) server B transmits content packets to the terminal, according to this distribution request signal. After that, if terminal is unable to receive content packets from server B, for example, the terminal transmits a distribution request signal again to server A, or transmits a distribution request signal to the third server in order to receive subsequent content specified in content packets transmitted from server B.

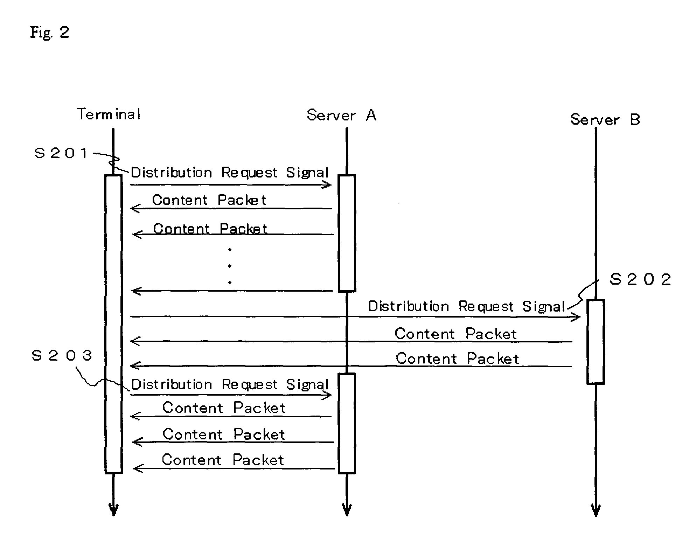

Fig. 2 is a sequential view illustrating data flow between terminal 101, server A 102 and server B 103. In step S201, a distribution request signal is transmitted from the terminal to server A. After that, content packet is transmitted from server A to the terminal. In step S202, the terminal transmits a distribution request signal to server B and receives a content packet from server B, if the terminal could not receive content packets from server A when content stored in server B, in that content packet, is specified as content to be received. In step S203, the terminal transmits a distribution signal to server A and receives content packets from server A, if the terminal could not receive content packets from server B when content stored in server A in that content packet is specified as content to be received.

If the content after the last content packet received from server A was specified in content packet transmitted from server A as the content to be received subsequently according to a distribution request signal transmitted from server B in step S202, the content indicated in the content packet transmitted from server B is interleaved with the content indicated in the content packet transmitted from server A.

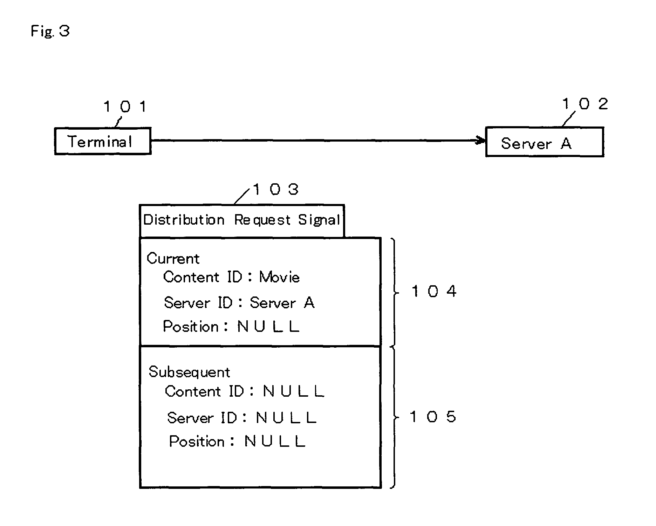

Fig. 3 illustrates a structure of the distribution request signal 103 transmitted from terminal 101 to server A (102). Distribution request signal 103 comprises current content identification information unit 104 specifying content requested to be distributed this time and subsequent content identification information unit 105 specifying content requested to be distributed subsequent to the content requested to be distributed currently.

In cases where content is requested to server A first, "movie 1" is specified as the value of the content ID in current content identification information unit, and "server A" is specified as the value of the server ID. Since content is requested first, the value of position is set to NULL indicating unspecified. In addition, since content requested to be distributed is not specified, each value of the content ID, server ID and position is set to NULL.

Moreover, it is not necessary for value content ID to be easily understandable for humans, but may be understandable to machines such as calculators. Furthermore, value of server ID, for example, may be the IP address of server A or FQDN (Full Qualified Domain Name). Furthermore, 'position' refers to information for specifying a point from which distribution starts. For example, in the case of streaming content distributed according to a time line, position is specified by time. Furthermore, if it is possible to distribute groups of pages such as an electronic book, in which position is specified by a page number.

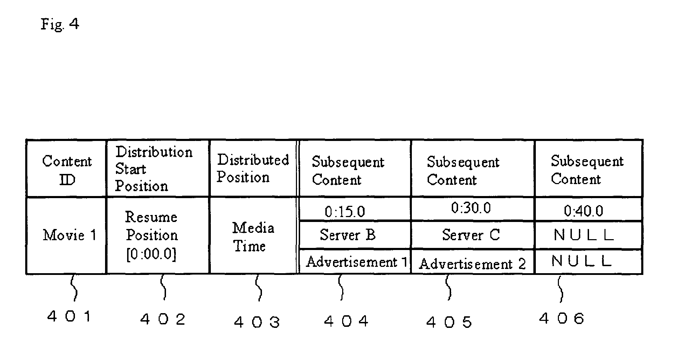

Fig. 4 illustrates structure of distribution program managing operation when server A distributes movie 1. Section 401 stores content ID.

Section 402 stores distribution start position information. In the description about the distribution start position in Fig. 4, "Resume Position" corresponds to start of distribution at the position indicated in the current content identification information unit in the distribution request signal. Moreover, parenthetic value such as [0:00.0] means that when position of content requested to be distributed this time is not specified, distribution is started at the position of the value in parentheses. In the above-mentioned case, the distribution is started at the position 0:00.0. Thereby movie 1 is started at 0:00.0 when the distribution request signal illustrated in Fig. 3 is received by server A.

Section 403 stores distributed position information. "Media time", a value stored in section 403, means that the position of content being distributed currently is to be recorded as information about content to be distributed subsequently.

Sections 404, 405, and 406 each store subsequent content information, which is information about content to be distributed subsequently. Subsequent content information is comprised of three units and each unit comprises the distribution end position of the content requested to be distributed currently, the server ID of the server transmitting a distribution request signal by the terminal subsequently and the content ID. Hence, in distribution program of Fig. 4, distribution of movie 1 ends at 0:15.0, 0:30.0, 0:40.0. (Although it will become apparent from a later description, to be precise, other content is interleaved at 0:15.0 and at 0:30.0 and distribution of movie 1 ends at 0:40.0) In cases where the distribution of movie 1 ends at 0:15.0, the terminal transmits the distribution signal requesting distribution of advertisement 1 to server B. Then, when the distribution of movie 1 ends at 0:30. 0, the terminal transmits the distribution request signal requesting distribution of advertisement 2 to server C. Then, when distribution of movie 1 ends at 0:40. 0, the terminal does not transmit a distribution request signal to any server because server ID and position information are set to NULL.

Moreover, the server generally distributes multiple contents, so that the server can reference multiple distribution programs. Thus, in cases where multiple distribution programs can be referenced such as this, the distribution program is adopted based on content ID requested by the distribution request signal.

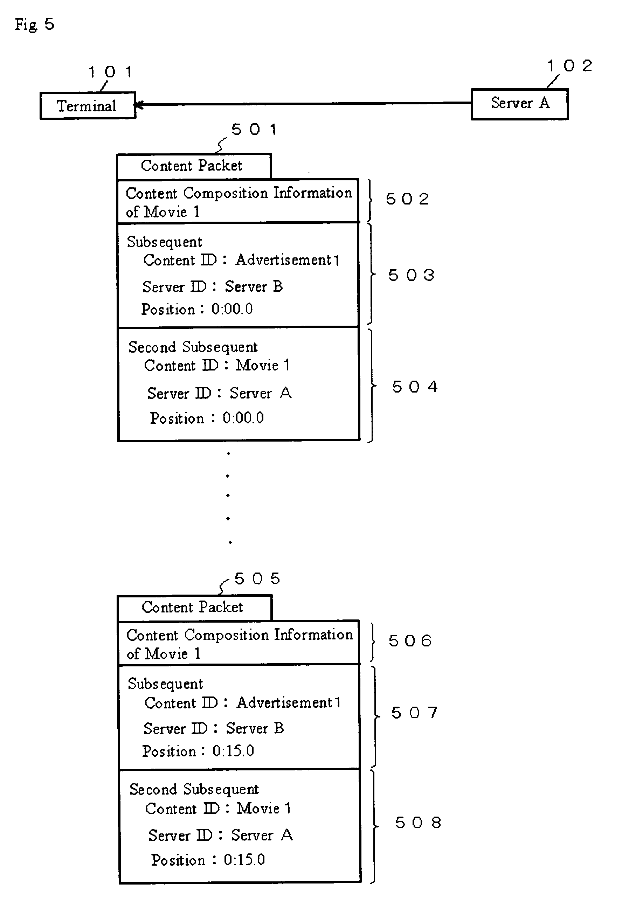

Fig. 5 illustrates the content packet transmitted to the terminal by server A according to the distribution request signal of Fig. 3 and the distribution program of Fig. 4.

The content packet is comprised of three units. For example, the content packet distributed first is comprised of units 502, 503, and 504. Unit 502 stores content composition information comprising the content of movie 1. (Hence, unit corresponding to unit 502 of content packet is called "content information storage unit") For example, image information and sound information etc. of movie 1 is stored.

Unit 503 stores information about content to be distributed subsequently. (Hence, unit 503 of the content packet is called "subsequent information storage unit") In the distribution program illustrated in Fig. 4, the terminal is programmed to transmit distribution request signal requesting distribution of advertisement 1 to server B, so that the value of the content ID in subsequent information storage unit 503 indicates advertisement 1 and the value of server ID in subsequent information storage unit 503 indicates server B. Moreover, section 403 indicates media time, so that the value of position will indicate 0:00.0 meaning a position of content indicated in the first content packet.

Unit 504 stores information about content to be distributed after the subsequent distribution. (Hence, unit 504 of the content packet is called the second subsequent information storage unit.) In the case that continuation of movie 1 is distributed from server A after distributing advertisement 1, "movie 1" is set as the value of content ID and "server A" is set as the value of server ID and "0:00. 0" is set as the value of position.

Content packets 501 to 505 are transmitted in this order by server A. In these packets, content composition information of movie 1 changes according to the contents of movie 1, furthermore, the value of the position in the subsequent information storage unit and the value of the position in the second subsequent information storage unit change according to distribution of content. (As a result, in the content packet of Fig. 5, the value of position in the subsequent information storage unit will be equal to the value of position in the second subsequent information storage unit.)

Content packet 505 illustrates the content packet transmitted at 0:15.0, so that the value of the position in subsequent information storage unit 507 and in second subsequent information storage unit 508 will indicate 0:15.0.

Server A stops distributing the content packet after distributing content packet 505 according to the distribution program illustrated in Fig. 4. Thereby terminal will detect reception of the end of the content packet.

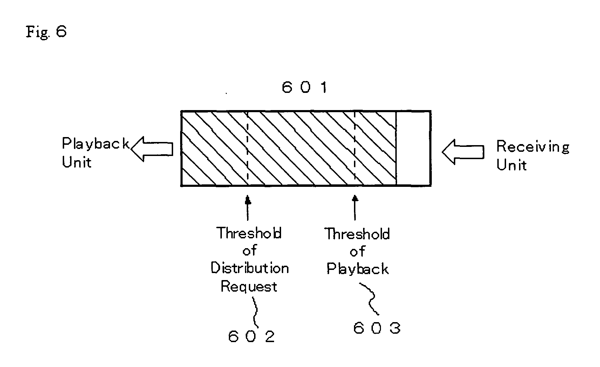

Fig. 6 illustrates an example of structure wherein the terminal detects the termination of distribution of the content packet. The content packet received in the receiving unit of the content packet is added to the end of queue 601 and the playback unit playing back content indicated by the content packet receives the content packet from the start of queue in order to play back.

Although the queue is initially empty, with the starting reception of content packet, queue is filled with content packet. In cases where the amount of content packet in the queue exceeds the threshold of playback 603, the playback unit will start playing back. Then, the content packet in queue decreases. In cases where the amount of content packet drops below threshold of distribution request 602, the termination of transmission of the content packet will be detected.

In cases where the terminal detects termination of transmission of the content packet, terminal will transmit the distribution request signal according to the content packet at the time point of 0:15.0.

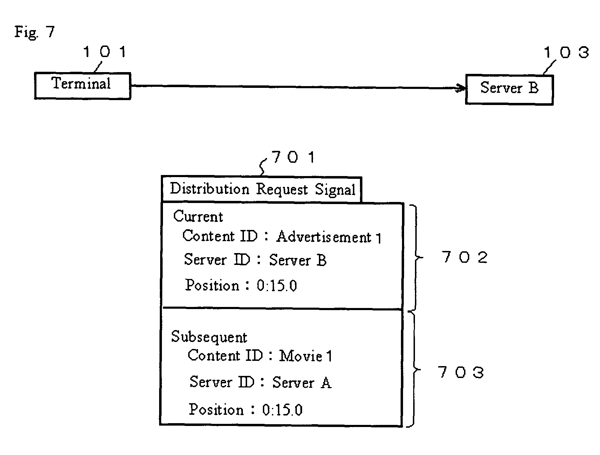

Fig. 7 illustrates the structure of the distribution request signal transmitted at this point. For example, the value of the content ID is set to advertisement 1, the value of the server ID is set to server B and the value of position is set to 0: 15. 0 in the subsequent information storage unit of the last content packet 505 transmitted from server A, so that the value of subsequent information storage unit 507 is set to current content identification information unit 702 of distribution request signal 701. Moreover, the value of the content ID is set to movie 1, the value of server ID is set to server A and the value of position is set to 0:15.0 in second subsequent information storage unit 508 of content packet 505, so that they are set to subsequent content identification information unit 703.

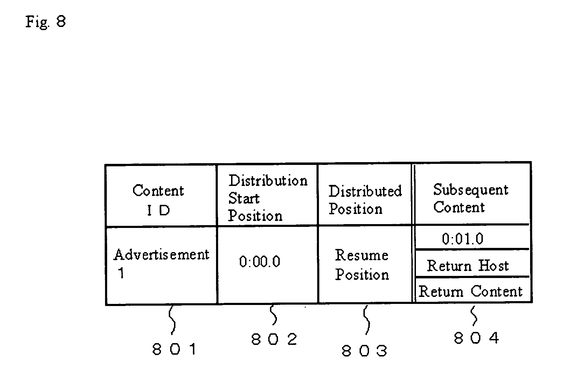

Fig. 8 illustrates the distribution program managing operation of server B transmitting distribution request signal for distributing advertisement 1.

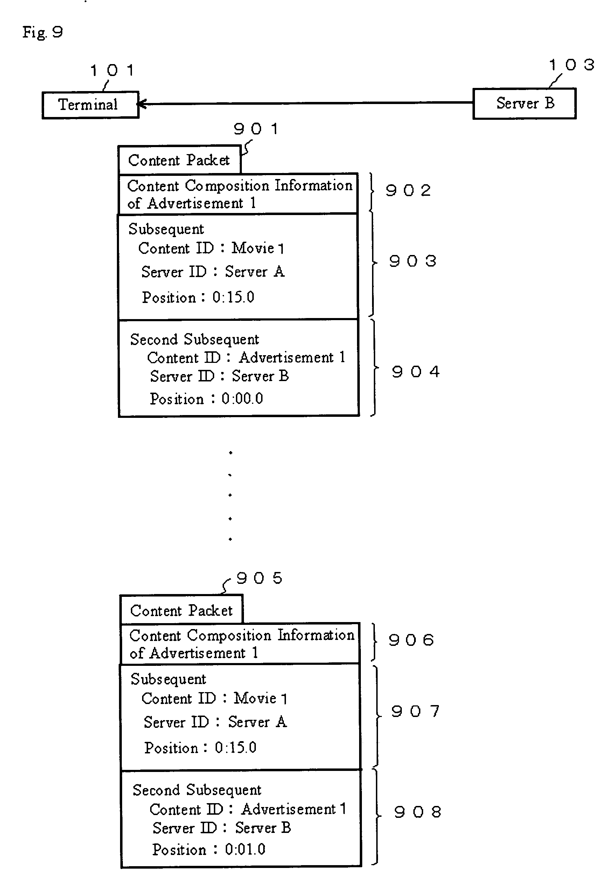

Fig. 9 illustrates the content packet distributed from server B according to distribution request signal illustrated in Fig. 8.

In cases where the specific numerical value of the position such as 0:00.0 is set to the section of the distribution start position in the distribution program, the distribution of the content will be started at the position specified in the section of the distribution start position without recourse to the value of the position in the current content identification information unit of the distribution request signal. Thereby, according to the distribution program illustrated in Fig. 8, distribution of advertisement 1 will be started at 0:00.0 without recourse to the value of the position in current content identification information unit 702 of the distribution request signal.

In cases where "Resume Position" is set to the distributed position of the distribution program, the value of the position in the current content identification unit of the distribution request signal is set to the value of the position in the subsequent information storage unit of the content packet. Thereby, according to the distribution program illustrated in Fig. 8, as illustrated in Fig. 9, the value of the position in subsequent information unit 907 and 908 of the content packet will be set to 0:15.0.

In section 804 storing subsequent content information, the server ID indicates "Return Host", and the content ID indicates "Return Content". "Return Host" and "Return Content" mean that the server ID and the content ID in the subsequent content identification unit included in the distribution request signal will be set to the server ID and the content ID in subsequent information storage unit of content packet. Thereby, as illustrated in Fig. 9, the content ID and the server ID in the subsequent information storage unit 903 and 907 will be set to "movie 1" and "server A", respectively.

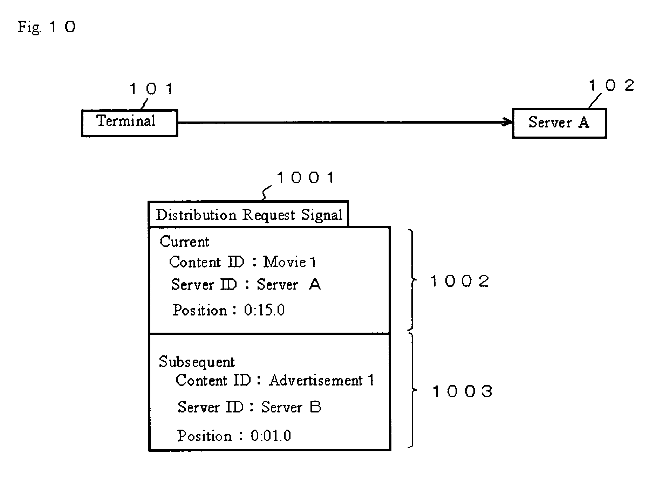

Fig. 10 illustrates the distribution request signal 1001 transmitted by terminal after reception of content packet 905.

Current content identification information unit 1002 of distribution request signal 1001 has the same content as subsequent information storage unit of content packet illustrated in Fig. 9, and subsequent content identification information unit 1003 requested to be distributed next time has the same content as second subsequent information storage unit 908 of the last content packet received from server B.

In cases where server A receives distribution request signal 1001, it starts transmitting the content packet of movie 1 at 0:15.0. In distribution program illustrated in Fig. 4, so that it is specified that distribution ends at 0:30.0 after ending at 0:15.0, server A transmits the content packet from 0:15.0 to 0:30.0. Moreover, in section 405 storing subsequent content information, the server ID of server requested distribution next time indicates "server C" and content ID of content requested to be distributed indicates "advertisement 2", so that, in subsequent information storage unit 1103 and 1107, the value of content ID is set to "advertisement 2", the value of server ID is set to "server C" and the value of position is set to the position of movie 1 being distributed. Moreover, in second subsequent information storage unit 1104 and 1108, the value of content ID is set to "movie 1", the value of server ID is set to "server A" and the value of position is set to the position of movie 1 being distributed currently.

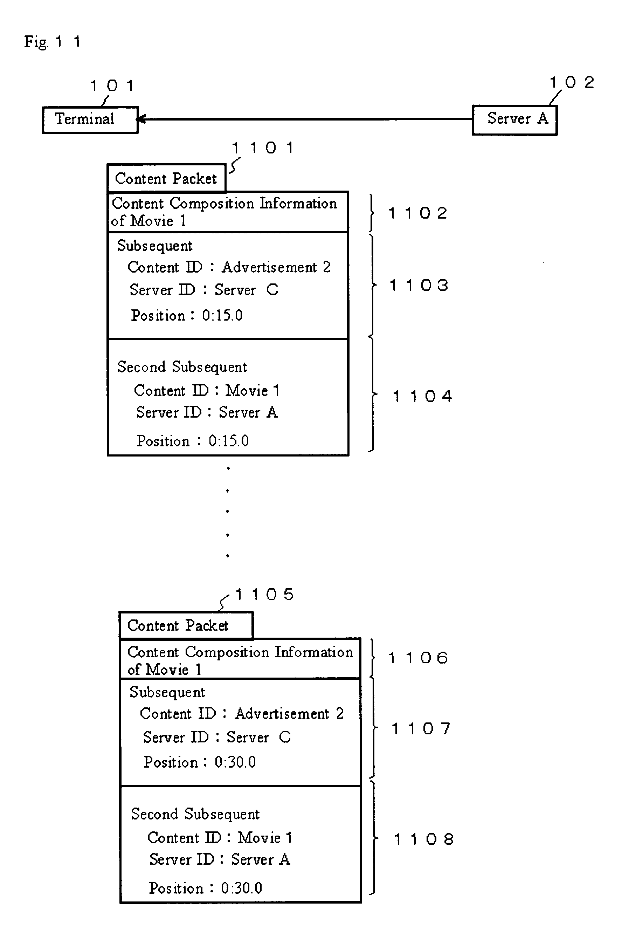

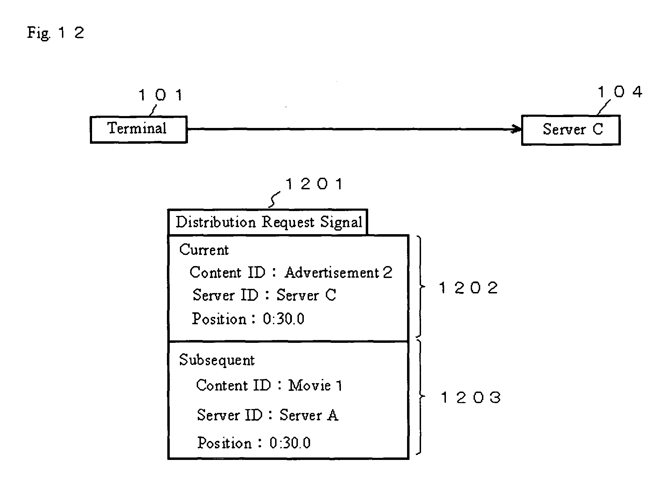

Fig. 12 illustrates a distribution request signal terminal which transmits after reception of content packet 1105. Current content identification information unit 1202 has the same value as the subsequent information storage unit of content packet illustrated in Fig. 11 and subsequent content identification information unit 1203 has the same value of second subsequent information storage unit 1108 of content packet 1105.

In cases where value of content ID in distribution program of server C indicates "advertisement 2", the same as distribution program illustrated in Fig. 8, server C transmits the content packet including the value of position indicating 0:01. 0 of advertisement 1 and the transmission of content packet stops, so that terminal transmits distribution request signal requesting distribution of movie 1 at 0:30.0 to server A.

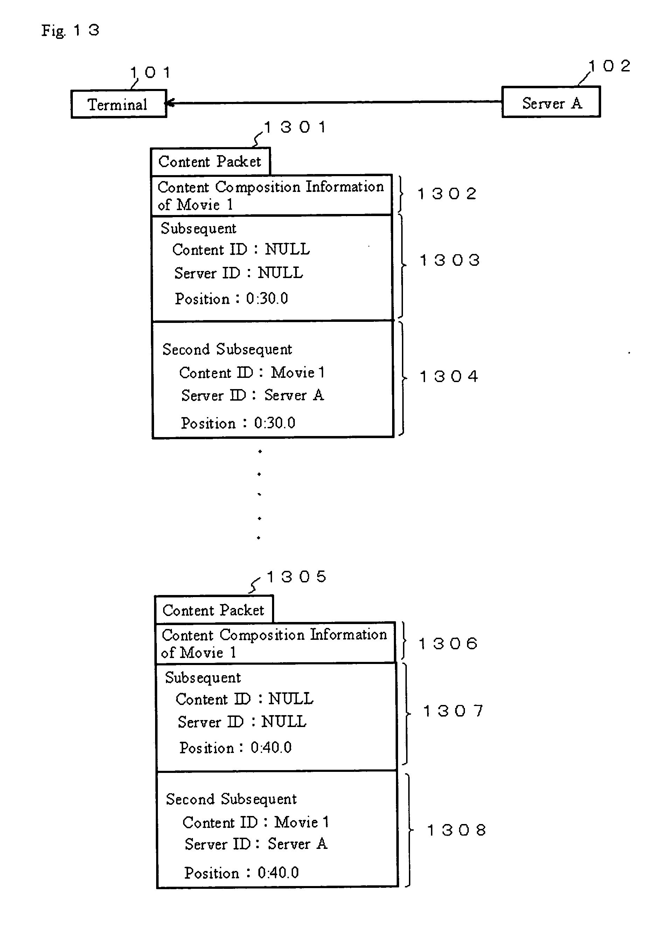

Fig. 13 illustrates the content packet transmitted from server A to the terminal according to distribution request signal requesting distribution of movie 1 at 0:30.0. According to the distribution program in Fig. 4, distribution ends at 0:40.0 after ending at 0:30.0. At this point, the value of server ID and the value of the content ID indicate NULL, so that the value of the content ID and the value of the server ID in subsequent information unit 1303 and 1307 are set to NULL. Thereby the terminal will not transmit the distribution request signal when it receives content packet 1305, including the value of the position indicating 0:40.0.

Therefore, according to this embodiment, it becomes possible to interleave other content during distribution of content distributed from server A.

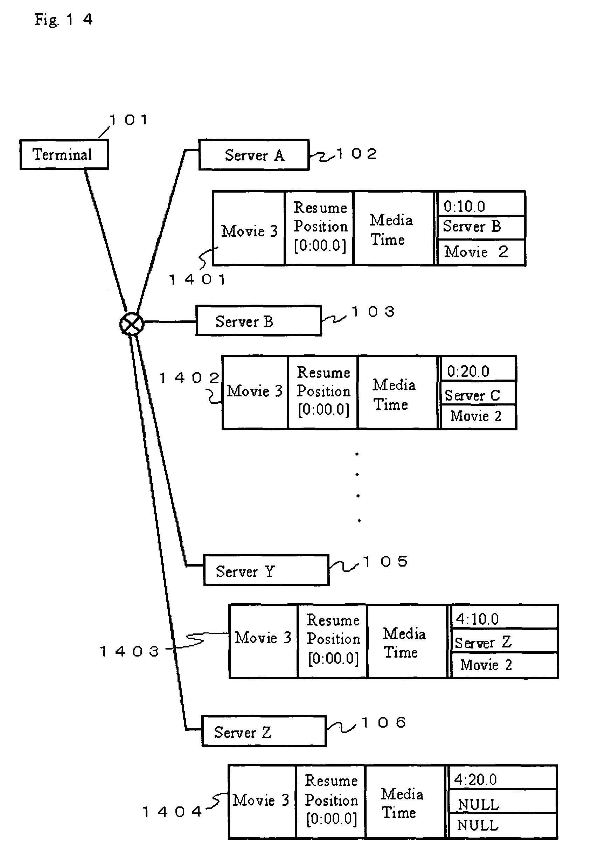

Fig. 14 illustrates the configuration for load-sharing of the server by sharing distribution of content with multiple servers.

In Fig. 14, distribution programs 1401, 1402,... 1403, and 1404 are each referenced by server A (102), server B (103), ...server Y (105), and server Z (106).

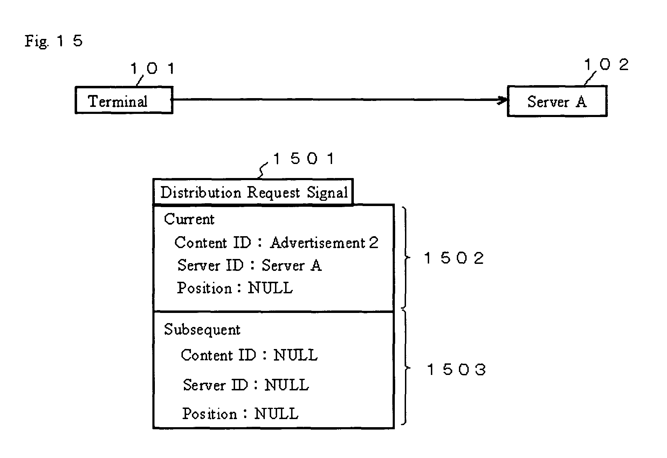

Fig. 15 illustrates distribution request signal 1501 terminal which distributes to server A first. Since it is the first distribution request, as in the case of Fig. 3, the value of the position in the current content identification information unit 1502 and each value in the second subsequent content identification information unit 1503 are set to NULL.

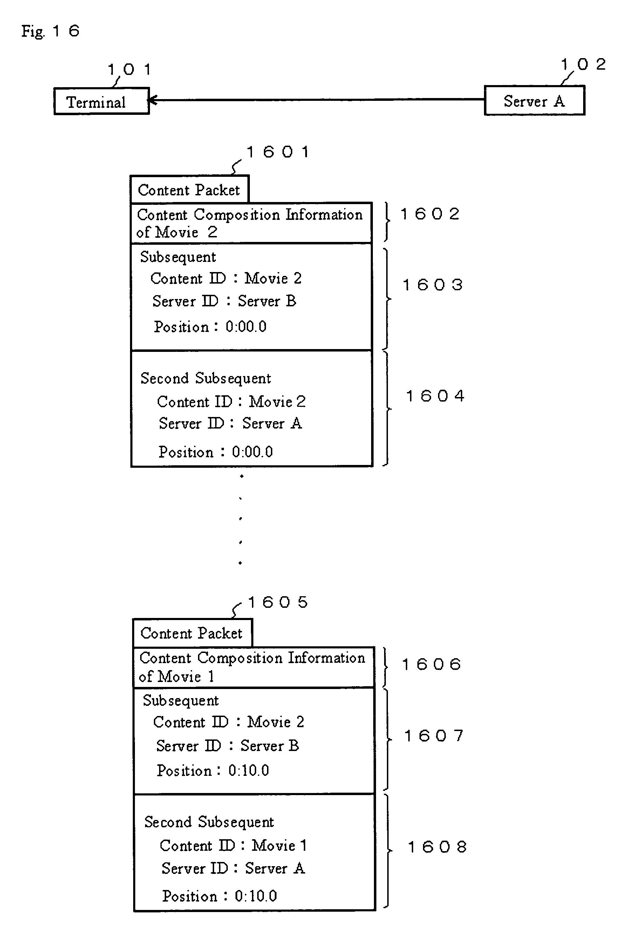

Fig. 16 illustrates the content packet transmitted from server A to the terminal according to the distribution request signal 1501. In distribution program 1401, the distribution is programmed to end at 0:10.0, so that the content packet, wherein the value of the position in subsequent information storage unit 1606 and in second subsequent information storage unit 1607, indicate 0:10.0 will be the last one transmitted from server A. Moreover, in distribution program 1401, it is programmed that movie 2 is requested for server B after the position of 0:10.0, so that in subsequent information storage unit 1603 and 1606 the value of the content ID is set to movie 2 and the value of the server ID is set to server B. Moreover, the value of the position in subsequent information storage unit and in the second subsequent information storage unit is set according to position indicated in the content packet.

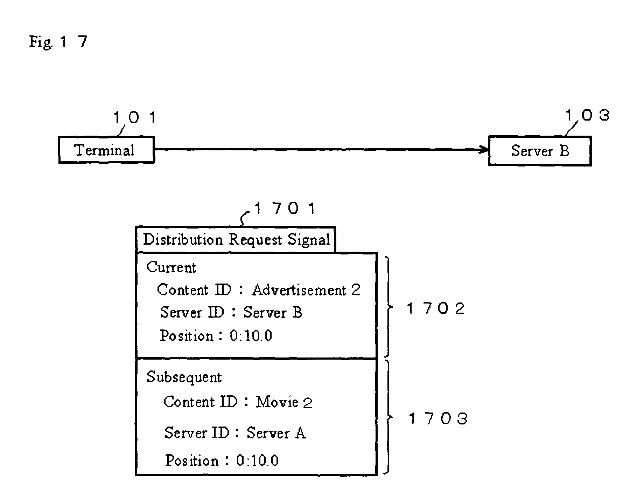

Fig. 17 illustrates the distribution request signal transmitted to server B after the terminal has received content packet 1605. The value stored in subsequent information storage unit 1606 is set to current content identification information unit 1702 and the value stored in second subsequent information storage unit 1607 is set to subsequent content identification information unit 1703.

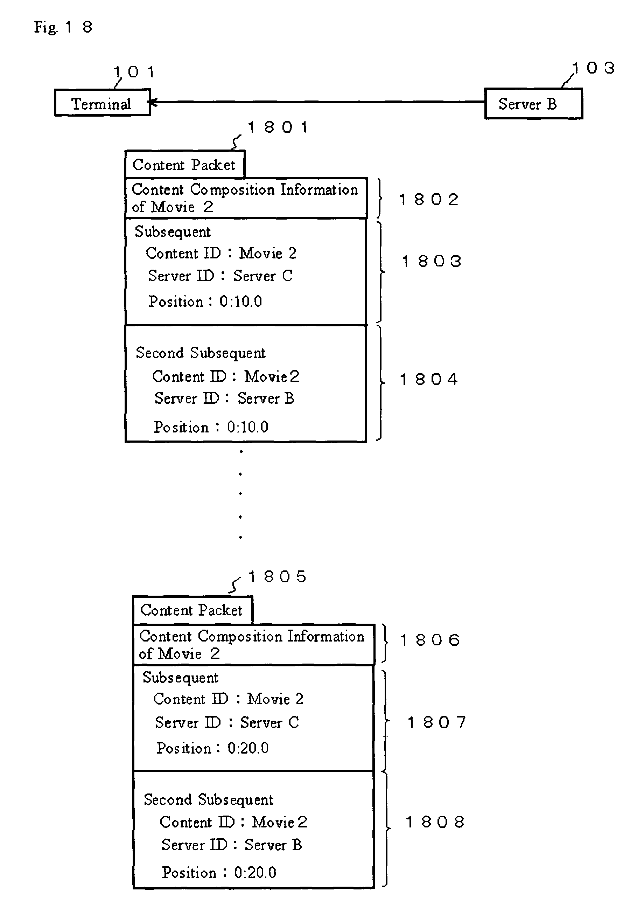

Fig. 18 illustrates the content packet transmitted from server B according to distribution request signal is illustrated in Fig. 17. The value of server ID indicates "server C" and the value of content ID indicates "movie 2" in the subsequent content information of distribution program 1402, so that the content packet, wherein the value of the content ID is set to "movie 2" and the value of the server ID is set to "server C", will be transmitted. Moreover, distribution program 1402 is programmed to end distribution at 0:20.0, so that content packet 1805 will be the last packet transmitted from server B.

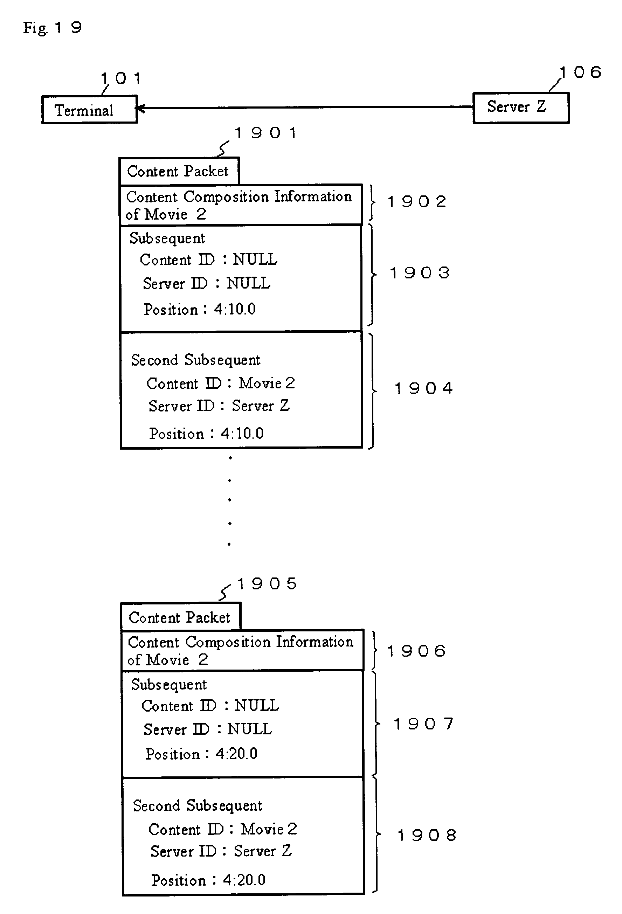

Fig. 19 illustrates that, as hereinbefore, the distribution request signal and the content packet are transmitted, and the last content packet is transmitted from server Z to the terminal. The value of the content ID and the value of the server ID indicate NULL in subsequent information storage units 1903 and 1907 of the content packet illustrated in Fig. 19, so that the new distribution request signal will not be transmitted after terminal receives content packet 1905.

Hence, according to this embodiment described hereinbefore, it becomes possible to reduce the load of a server by sharing distribution of content with multiple servers.

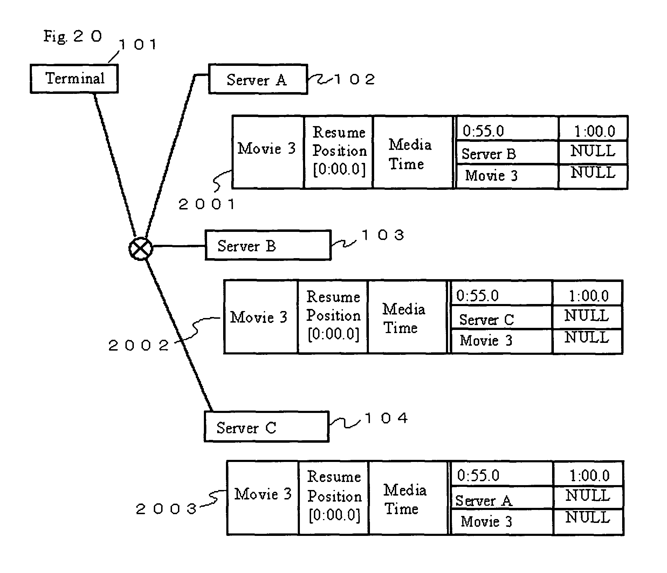

Fig. 20 illustrates another configuration wherein multiple servers share distribution of content. Although, in above example, distribution of content is completed by the last server Z, in this example below, it becomes possible to complete distribution by any server.

In Fig. 20, distribution programs 2001, 2002, and 2003 are referred by server A(102), server B(103), and server C(104) in order to distribute movie 3 content. These distribution programs indicate that distribution of movie 3 ends at 0:55.0 and at 1:00.0.

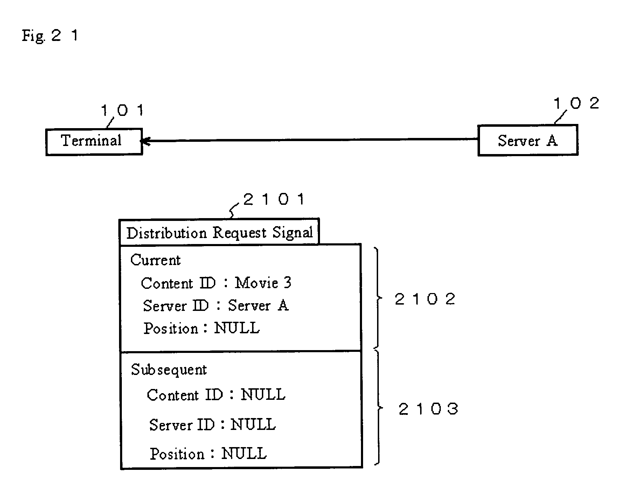

Fig. 21 illustrates a distribution request signal transmitted from the terminal to server A.

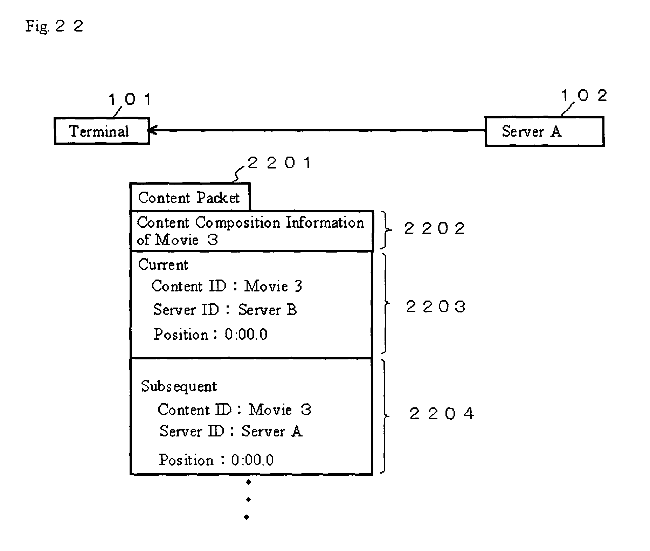

After transmission of the distribution request signal of Fig. 21, ordinarily, as illustrated in Fig. 22, content packets from 0:00.0 to 0:55.0 are transmitted from server A, then the distribution request signal is transmitted from the terminal to server B, so that the content packet from 0:55.0 to 1:00.0 will be transmitted from server B.

If the terminal detects that it is impossible to receive the content packet from server A due to congestion etc., the distribution request signal will be transmitted to server B. Moreover, if reception of the content packet from server B is interrupted, the distribution request signal will be transmitted to server C. To be the same as hereinbefore, if reception of the content packet from server C is interrupted, the distribution request signal will be transmitted to server A.

Hence, according to the embodiment described hereinbefore, it becomes possible to implement a content distribution system overcoming congestion of a transmission path.

Note that the server and the terminal described hereinbefore are implemented by setting the computer to operate the program. Additionally, the content packet and the distribution request signal may be considered as a data structure traded between these computers. The distribution program may be considered as a data structure referenced by the computer which implements the server.

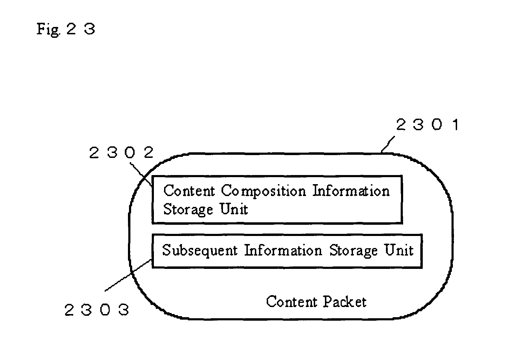

Fig. 23 illustrates the organization of the content packet relating to the first embodiment of the present invention. Content packet 2301 comprises content composition information storage unit 2302 and subsequent information storage unit 2303.

Note that the "content packet" herein corresponds to a data structure in a layer higher than the physical layer in OSI reference model of the network, for example, in the application layer

Content composition information storage unit 2302 stores content composition information. "Content composition information" corresponds to the information comprising content distributed. For example, in the streaming distribution of an image, content composition information storage unit corresponds to a unit storing necessary information for playback of image.

Subsequent information storage unit 2303 stores subsequent content identification information. Subsequent content identification information corresponds to information for identification of subsequent content, and "subsequent content" corresponds to the content to be distributed next to content whose composition of information is stored in content composition information storage unit 2302. Content ID, which is an identifier of content, may be cited as an example of subsequent content identification information.

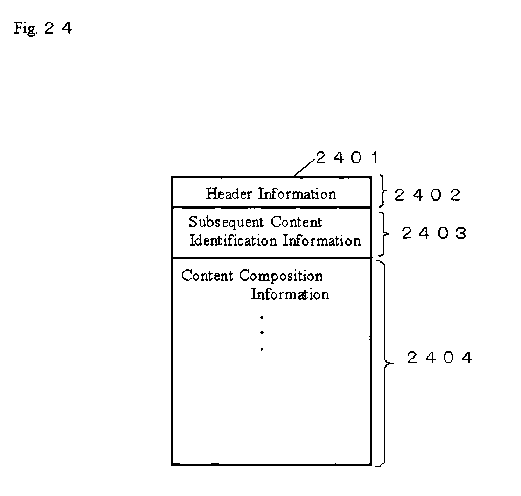

Fig. 24 illustrates a more specific structure of the content packet. Content packet 2401 comprises unit 2402 storing header information, subsequent information storage unit 2403, and content composition information storage unit 2404. Unit 2402 storing header information stores, for example, a sequence number attached to the content packet, information on the size of content packet, offset data of the subsequent information storage unit, and offset data of the content composition information storage unit etc.

The content packet comprising subsequent information storage unit has an advantageous effect. When it becomes impossible to receive a content packet during distribution for any reason, for example, the terminal can request to receive the content identified by the subsequent content identification information stored in the subsequent information storage unit of the last content packet received, so that the content can be played back continuously.

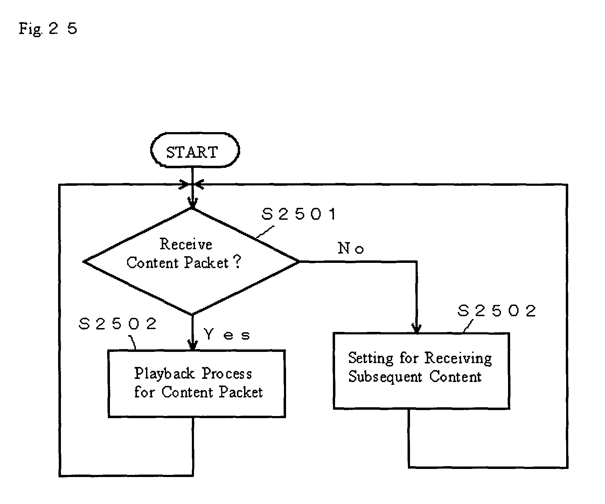

Fig. 25 is a flow chart demonstrating operation of the terminal. In step S2501, it is determined whether the content packet could be received. In cases where reception of the content packet, step S2502, is completed, playback process of content will be performed. In cases where reception of content packet, step S2503, is not completed, the setting process for receiving subsequent content identified by subsequent content identification information stored in subsequent information storage unit, will be performed. In detail, for example, the distribution request signal of the subsequent content is transmitted and so on.

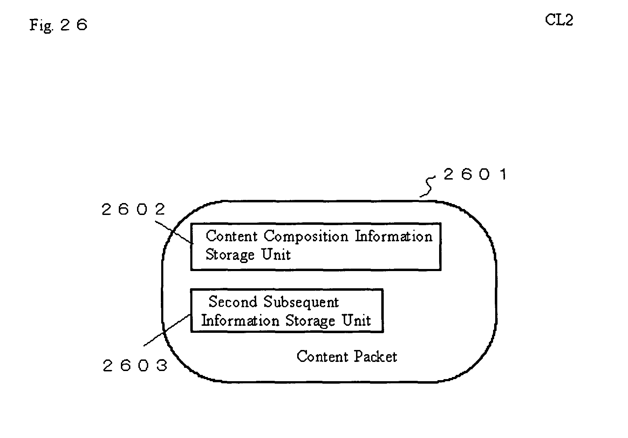

Fig. 26 is a block diagram of the content packet relating to the second embodiment of the present invention. Content packet 2601 comprises content composition information storage unit 2602 and second subsequent information storage unit 2603.

Content composition information storage unit 2602 is the same as the content composition information storage unit of the first embodiment.

Second subsequent information storage unit 2603 stores the second subsequent content identification information. "Second subsequent content identification information" corresponds to information for identifying the second subsequent content, and "second subsequent content" corresponds to content distributed after the subsequent content whose information for composing itself is stored in content composition information storage unit 2602. Content ID, which is an identifier of content, may be cited as an example of the second subsequent content identification information.

The content packet comprising second subsequent information storage unit has an advantageous effect. Hence, it becomes possible to play back other content during distribution and to return the first content after the end of playback of other content.

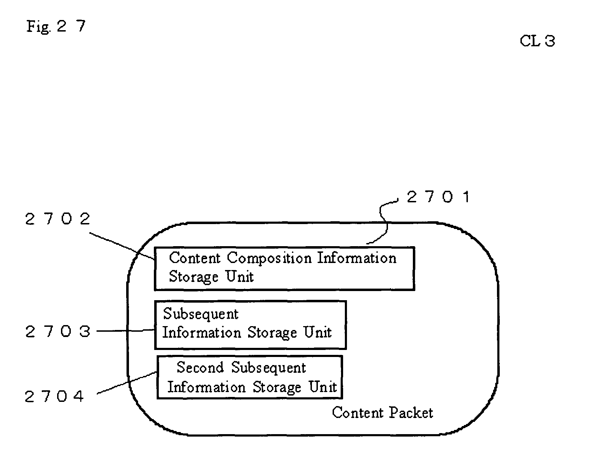

Fig. 27 illustrates a block diagram of content packet relating to the third embodiment of the present invention. Content packet 2701 comprises content composition information storage unit 2702, subsequent information storage unit 2703 and second subsequent information storage unit 2704.

"Content composition information storage unit", "subsequent information storage unit" and "second subsequent information storage unit" are the same as described in the first embodiment or in the second embodiment.

The content packet comprises the subsequent information storage unit and the second subsequent information storage unit, so that, in addition to the effects of the first embodiment and the second embodiment, it becomes possible to specify content to be received when the content packet cannot be received for any reason. Moreover, it becomes possible to specify the content to be received when the content packet of that content specified also cannot be received for any reason. Therefore, it becomes possible to overcome interruption of reception.

The composition of the content packet relating to the fourth embodiment of the present invention is the same as illustrated in Fig. 23. However, the subsequent information storage unit in the present invention stores the subsequent content position information. "Subsequent content position information" corresponds to information indicating the position in the subsequent content for starting distribution. In cases where content is distributed along a time line, the subsequent content position information is indicated by time. Furthermore, if it is possible to indicate in units of pages, such as electronic book, the position is specified by a number of a page.

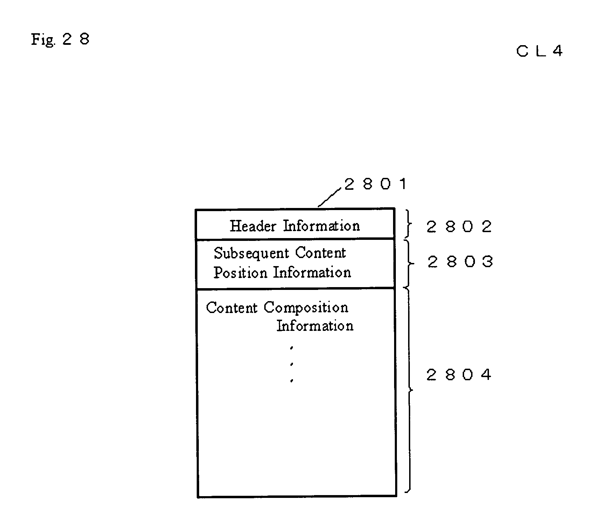

Fig. 28 illustrates a more specific composition of content packet. Content packet 2801 comprises unit 2802 storing header information, subsequent information storage unit 2803, and content information storage unit 2804.

By the use of the content packet of the present embodiment, it becomes possible to specify the position of the content to be distributed subsequently according to position of content being distributed currently. For example, when it is programmed that other content is received in preparation of the stoppage of reception of the content packet, if reception of the content packet is stopped during part of an advertisement, it becomes possible to distribute part of advertisement of other content. Therefore, it is possible to reduce the interruption perceived by the viewer.

The composition of the content relating to the fifth embodiment of the present embodiment is the same as illustrated in Fig. 26 used for the description of the second embodiment. However, the second subsequent information storage unit of the present embodiment stores the second subsequent content position information. "Second subsequent content position information" corresponds to information indicating the position in the second subsequent content for starting distribution.

Hence, by the use of the content packet of the present embodiment, it is possible to specify the position of the content to be distributed after the subsequent distribution according to position of content being distributed currently. Content to be distributed after the subsequent distribution exists, so that, for example, it will become possible to reduce the interruption perceived by the viewer.

The composition of content in the sixth embodiment of the present embodiment is the same as illustrated in Fig. 27 used for description of the third embodiment. However, the subsequent information storage unit and second subsequent information storage unit in the present embodiment are the same as described in the fourth embodiment and the fifth embodiment.

Hence, according to the present embodiment, it becomes possible to provide a system which can reduce interruption, as described in the third embodiment, moreover, it becomes possible to reduce the interruption perceived by the viewer when reception of content packet is terminated, because the position of the content is specified.

The content packet of the seventh embodiment of the present invention comprises the content composition information storage unit and the subsequent information storage unit. However, the subsequent information storage unit of the present embodiment stores the subsequent server identification information. "Subsequent server identification information" corresponds to information for identifying subsequent server and "subsequent server" corresponds to the server to which the terminal receiving this content packet connects next to server distributing this content packet.

Hence, when content packet received by terminal is distributed from the server identified by IP address of, for example, "10. 1.2.3", if the IP address of "10.4.5.6" is stored in the subsequent information storage unit of that content packet, the terminal will receive the content packet from server identified by the IP address of "10.4.5.6" after reception of the content packet from the server identified by the IP address of "10. 1.2.3".

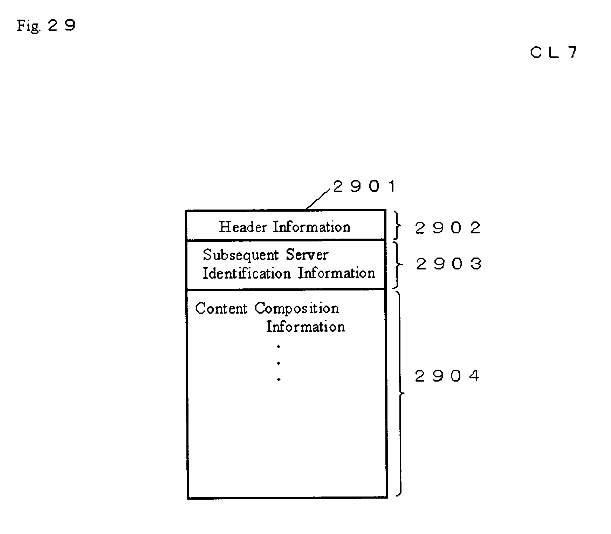

Fig. 29 illustrates the structure of content packet relating to the present embodiment. Content packet 2901 comprises unit 2902 storing header information, subsequent information storage unit 2903 and content composition information storage unit 2904.

By the use of content packet of the present embodiment, when it becomes possible for terminal to receive the content packet from the server distributing the content packet currently, the terminal will be able to receive the content packet from the server specified by the subsequent information storage unit. Hence, it becomes possible to recover from interruption of playback of the content.

The content packet relating to the eighth embodiment of the present invention, as described in the second embodiment and the fifth embodiment, comprises the content composition information storage unit and the second subsequent information storage unit. However, in the present embodiment, the second subsequent information storage unit stores the second subsequent server identification information. "Second subsequent server identification information" corresponds to the information for identifying second subsequent server and "second subsequent server" corresponds to the server to which the terminal receiving this content packet connects after the server distributing this content packet.

By the use of the content packet of the present embodiment, as long as the server distributing the content packet currently is specified as the second subsequent server, even though the terminal receives content packet from the other server during distribution, it will be able to receive content packet from former server. Hence, for example, if an interruption occurs in the server, it will be able to prepare for recovery from the interruption.

The content packet of the ninth embodiment of the present invention, as described in the third embodiment and the sixth embodiment, comprises the content composition information storage unit, the subsequent information storage unit and the second subsequent information storage unit. However, in the present embodiment, the subsequent information storage unit is the same as described in the seventh embodiment and the second subsequent information storage unit is the same as described in the eighth embodiment.

The content packet comprises the subsequent information storage unit and the second subsequent information storage unit, so that, in addition to effects of the seventh embodiment and the eighth embodiment, it becomes possible to specify content to be received when the content packet cannot be received for any reason, moreover, it becomes possible to specify content to be received when the content packet of that content specified also cannot be received for any reason. Therefore, it becomes possible to recover from interruption.

Moreover, from the first embodiment to the ninth embodiment may be practiced in any combination. The embodiment, a combination of these embodiments, is described by the use of Fig. 5, 7, 9, 11, 13, 16, 18, 19 and 22.

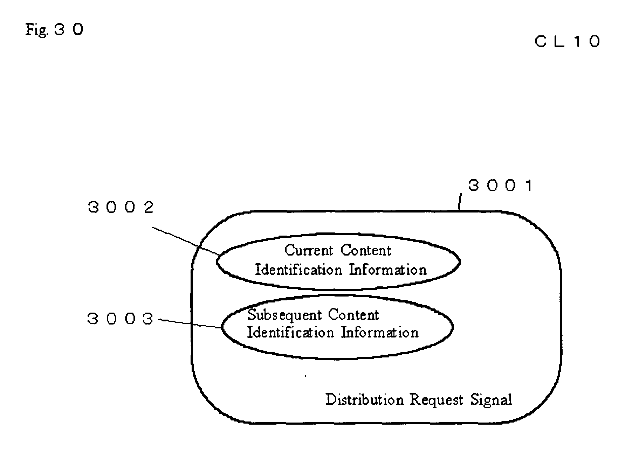

Fig. 30 illustrates the structure of the distribution request signal of the tenth embodiment of the present invention. The "distribution program" corresponds to signal transmitted from terminal in order to request distribution of content to the server.

The distribution request signal 3001 comprises current content identification information 3002 and subsequent content identification information 3003.

"Current content identification information" 3002 corresponds to information for identification of the current content requested to be distributed at this time. For example, it may be the name of the content such as "movie 1". The distribution request signal is transmitted from terminal to server, so that the content identified by the current content identification information is transmitted from server to terminal.

"Subsequent content identification information" 3003 corresponds to information for identification of subsequent content requested to be distributed subsequent to the current content.

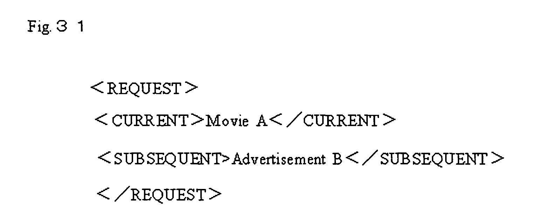

Fig. 31 expresses distribution request signal by XML (Extensible Markup Language) format. In Fig. 31, "movie A" allocated in a part surrounded by <CURRENT> and </CURRENT> corresponds to current content identification information and "advertisement B" allocated in a part surrounded by < SUBSEQUENT> and </SUBSEQUENT> corresponds to subsequent content identification information. This distribution request signal indicates that movie A is distributed first and advertisement B is distributed next.

The distribution request signal subsequent content identification information in addition to current content identification information, so that it becomes possible to prepare for distribution of content identified by subsequent content identification information while server distributes content identified by current content identification information. Moreover, subsequent content identification information can be stored in the subsequent information storage unit of content packet used for distribution of the content.

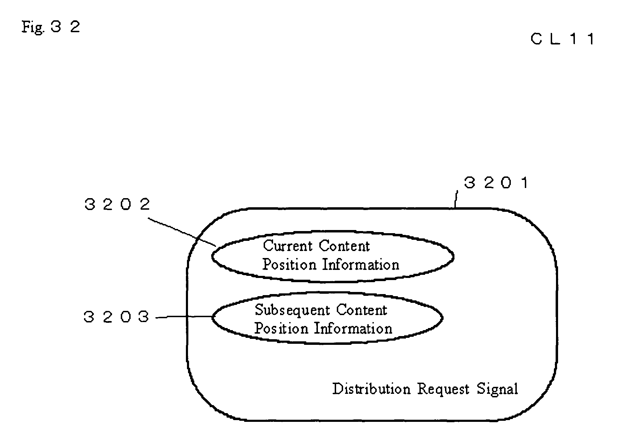

Fig. 32 illustrates the structure of the distribution request signal relating to the eleventh embodiment of the present invention. Distribution request signal 3201 comprises current content position information 3202 and subsequent content position information 3203.

"Current content position information" 3202 corresponds to the information indicating the position of the current content requested to be distributed currently for starting distribution. The time passing from the start of distribution is cited as a specific example of information indicating the position in the case of the content distributed along a time line such as streaming data.

"Current content position information" 3203 corresponds to the information indicating the position to start distribution in the subsequent content requested to be distributed subsequent to current content.

For example, when the current content is "movie A" and the subsequent content is "advertisement B", the current content position information is set to 0:10.0 and the subsequent content position information is set to 0:00. 0, so that movie A is distributed from 0:10.0 and then advertisement B is distributed from 0:00.0.

The distribution request signal comprises the current content position information and the subsequent content position information, so that it becomes possible to distribute another content during the distribution of a particular content. Especially in cases where other content is interleaved in the distribution of the first content and distribution of the first content is restarted, it becomes possible to set restart position according to the current content position information.

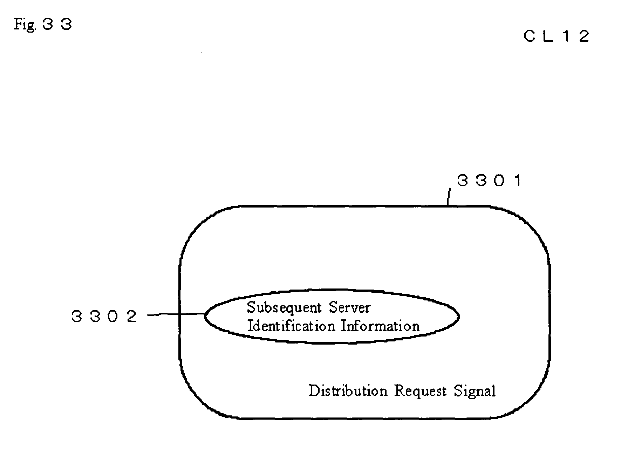

Fig. 33 is a block diagram of the distribution request signal relating to the twelfth embodiment of the present invention. Distribution request signal 3301 comprises the subsequent server identification information 3302.

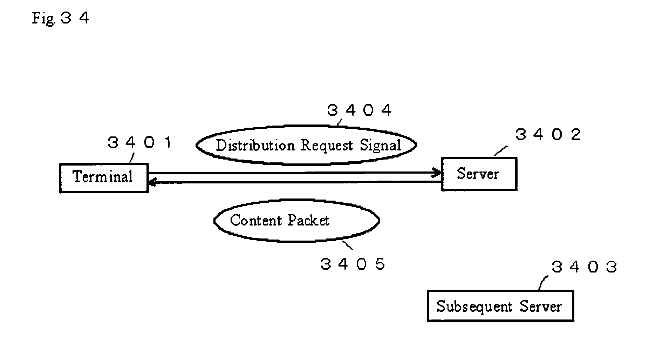

"Subsequent server identification information" 3302 corresponds to information for the identification of the subsequent server to which terminal receiving content packet connects subsequent to the server distributing the content packet. For example, IP address and FQDN are cited as examples of subsequent server identification information. Note that "content packet" described here, as illustrated in Fig. 34, corresponds to content packet 3405 transmitted from server 3402 according to distribution request signal 3404 transmitted from terminal 3401.

Distribution request signal comprises subsequent server identification information, so that the terminal can receive subsequent content from a different server to the server distributing the current content. Thereby it becomes possible to receive subsequent content, for example, even though the server distributing the current content may not be operating properly.

Moreover, the tenth embodiment through the twelfth embodiment may be practiced in any combination. The embodiment, a combination of these embodiments, is described by the use of Figs. 3, 7, 10, 12, 15, 17 and 21.

Fig. 35 is a schematic view of the thirteenth embodiment through the sixteenth embodiment. The distribution program 3501 relating to the thirteenth embodiment thorough the sixteenth embodiment is used for making the server generate the content packet 3502 comprising the content composition information storage unit 3503. Note that content composition information storage unit 3503 may be defined the same as the content composition information storage unit described in the first embodiment or the ninth embodiment.

Distribution program 3501 may be stored inside of the server or may be stored outside of the server and be in the state where it is readable in response to a request of the server.

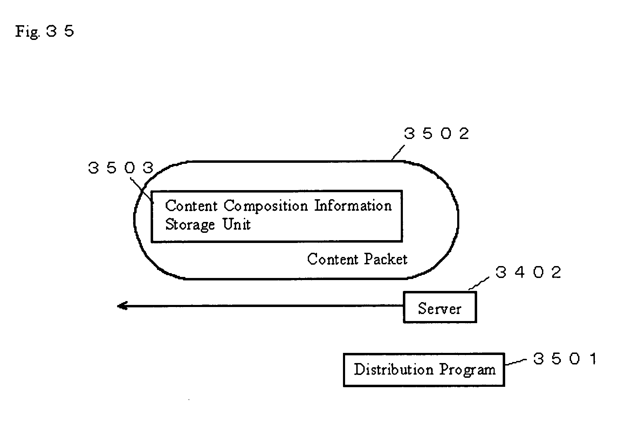

Fig. 36 illustrates a block diagram of the distribution program of the thirteenth embodiment of the present invention. Distribution program 3601 comprises distribution start position information storage unit 3602.

"The distribution start position information storage unit" stores the distribution start position information. "Distribution start position information" corresponds to information indicating the position for starting distribution in the current content. For example, in cases where content is distributed along a time line, time such as 0:10.0 may be set to distribution start position information. Moreover, it is not necessary to include a numerical value. For example, in cases where position is set in the distribution request signal, it may be a symbol indicating that the distribution is started at the position specified by the distribution request signal. Moreover, it may include a numerical value and symbol. For example, it may be a program itself or may be something to be considered as a program. Indication that distribution is started at a predetermined position in cases, where position for start distribution is unspecified, can be cited as example of such a case.

As described above, the distribution program comprises a distribution start position information storage unit, so that it becomes possible to prepare for cases where, for example, the position for starting distribution is not included in distribution request signal.

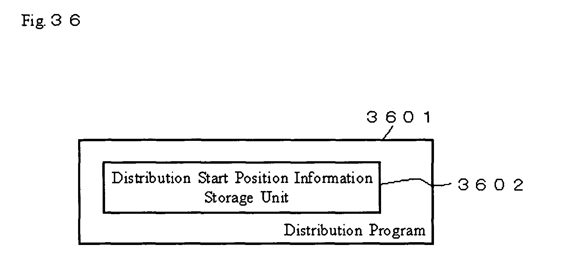

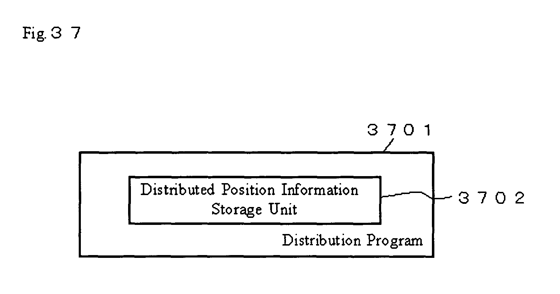

Fig. 37 is a block diagram of distribution program of the fourteenth embodiment of the present invention. Distribution program 3701 comprises distributed position information storage unit 3702.

"Distributed position information storage unit" 3702 stores distributed position information. "Distributed position information" corresponds to information indicating distributed position of current content. For example, it is information indicating where the current content has been distributed.

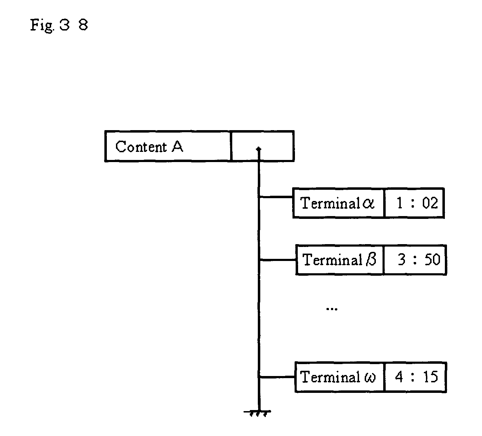

Fig. 38 illustrates a list configuration storing distributed position information about content A by each terminal. Since the terminal receiving a content is not limited to only one terminal, the memory area is assigned by terminal receiving content in order to store distributed position information.

Alternatively, distributed position information may be character strings of media time as indicated in section 403 of Fig. 4. In this case where "media time" is considered to be a type of parameter and is evaluated in circumstances corresponding to terminal, so that the distributed position information may be acquired corresponding to that terminal.

The distribution program comprises the distributed position information storage unit, so that, for example, it becomes possible to manage distribution of content on the server side.

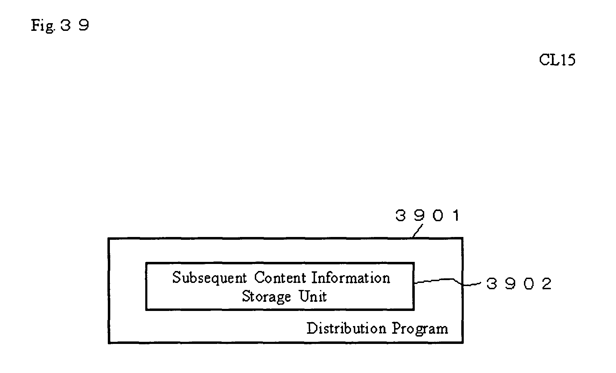

Fig. 39 is a block diagram of distribution program relating to the fifteenth embodiment of the present invention. Distribution program 3901 comprises subsequent content information storage unit 3902.

"Subsequent content information storage unit" 3902 stores subsequent content information. "Subsequent content information" is information relating to subsequent content which terminal requests distribution subsequent to current content.

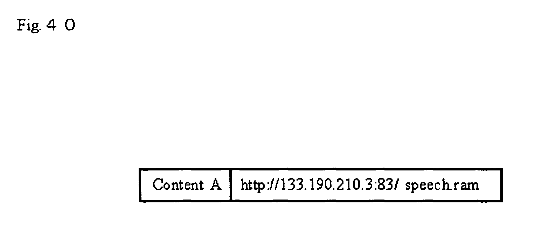

Fig. 40 illustrates subsequent content information stored in the subsequent content information storage unit. In cases where, URL of subsequent content, to which terminal requests distribution subsequent to content A, is stored.

The distribution program comprises subsequent content information storage unit, so that it becomes possible that the server makes the content packet including the subsequent content information. Thereby it becomes possible that terminal can receive information about content to be distributed subsequently, thus making it is possible to transmit the distribution request of content to be distributed and to avoid interruption of playback of content, in cases where distribution of current content stops for some reason.

The distribution program relating to the sixteenth embodiment of the present invention comprises the subsequent content information in the distribution program relating to the fifteenth embodiment comprising content end position information, subsequent content distribution server identification information and subsequent content identification information.

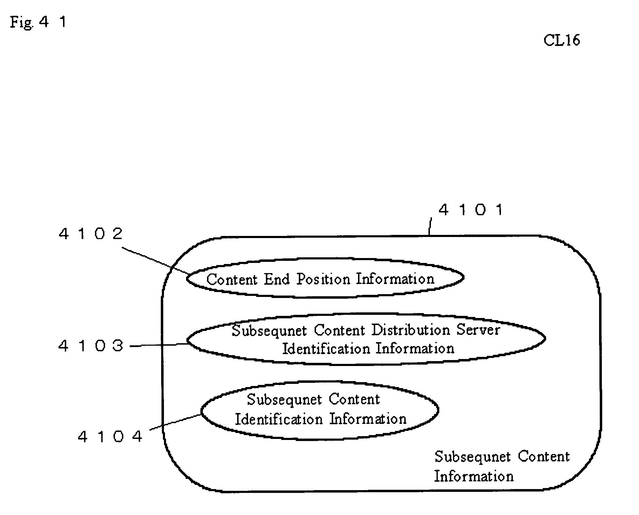

Fig. 41 is a block diagram of the subsequent content information in distribution program relating to the present embodiment.

"Content end position information" corresponds to the information indicating the end position of content composed of content composition information stored in the composition information storage unit of the content packet. For example, this could include time for stopping distribution of content.

"Subsequent content distribution server identification information" corresponds to information for identification of content distribution server distributing subsequent content. For example, this could include the IP address or FQDN of the server.

"Subsequent content identification information" corresponds to information for identification of subsequent content. For example, this could include the name of content.

The thirteenth embodiment through the sixteenth embodiments may be practiced in any combination. The embodiment of distribution program, a combination of these embodiments, is described by the use of Figs. 4, 8, 14 and 20.

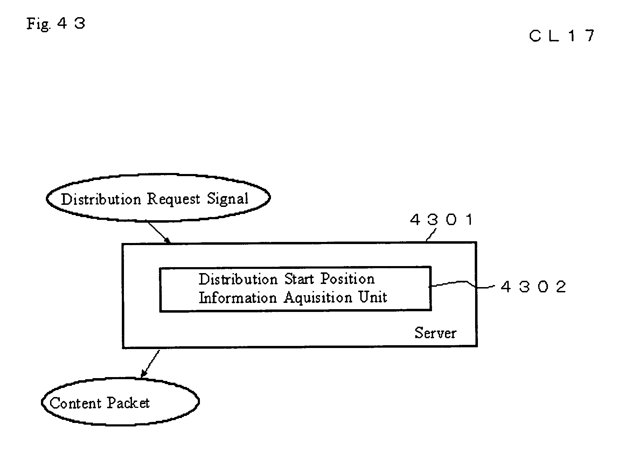

Fig. 43 is a functional block diagram of the server relating to the seventeenth embodiment of the present invention. Server 4301 comprises distribution start position information acquisition unit 4302.

"Distribution start position information acquisition unit" 4302 acquires the current content position information from distribution request signal in cases where the current content distribution start instruction information is set to the distribution start position information. Note that "current content distribution start instruction information is set to distribution start position information" may be case where distribution start position information includes current content distribution start instruction information.

Note that "current content distribution start instruction information" corresponds to directions information to start distribution at position indicated in current content position information of distribution request signal. "Resume Position" indicated in Section 402 of Fig. 4 can be cited as a specific example.

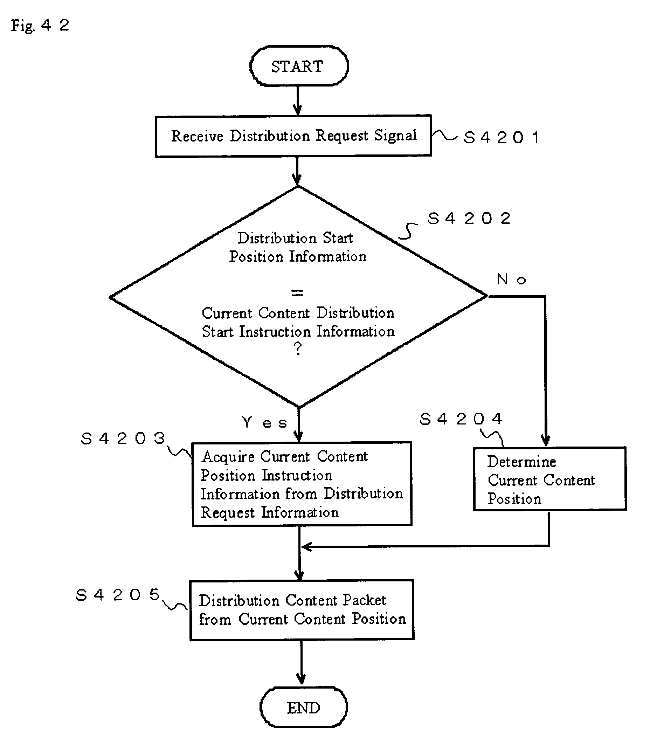

Fig. 42 is a flow chart demonstrating operation of server in the present embodiment. In step S4201, it receives distribution request signal.

In step S4202, it is determined whether distribution start position information is current content distribution start instruction information. If so, step S4203 will be processed. If not, step S4204 will be processed.

Moreover, server distributes multiple contents and distribution program corresponds to each content, so that it becomes possible to reference multiple distribution programs. In this case, after selection of the distribution program, step S4202 will be processed according to the current content identification information included in the distribution program. (Also in the following embodiments relating to the server, in cases where server can reference multiple distribution programs, the referencing of the distribution program is performed after selection of distribution program according to current content identification information included in distribution request signal.)

In step S4203, the current content position information is acquired from the distribution request signal. Then step S4205 is processed.

In step S4204, the current content position is determined by some method. For example, in cases where the distribution start position information includes the distribution start position, the position will be set to the current content position. Alternatively, the start of content may be set to current content position. Then step S4205 is processed.

In step S4205, the content packet is distributed from the current content position.

According to the present embodiment, it becomes possible to distribute the content if it is requested by the terminal.

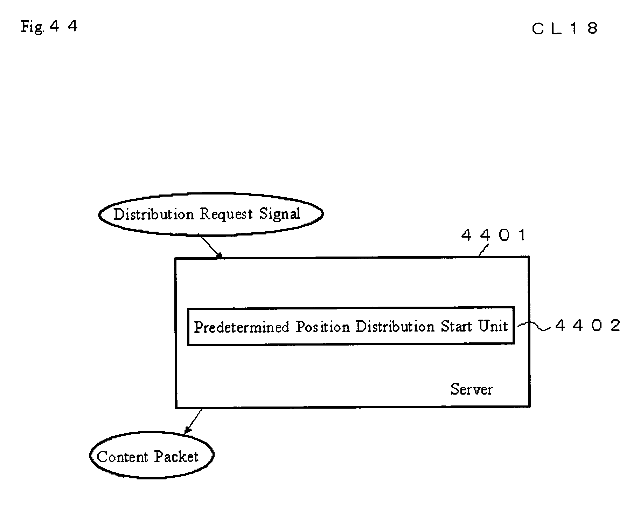

Fig. 44 is functional block diagram of server relating to the eighteenth embodiment of the present invention. Server 4401 comprises predetermined position distribution start unit 4402.

"Predetermined position distribution start unit" 4402 starts distribution at a predetermined position of content when the current content position information is unspecified.

Note that "current content position information is unspecified" means that a special value, for example NULL, is set to current content position information. Alternatively, in cases where the flag indicating whether current content position information is set to unspecified is included in the distribution request signal, it means that the flag is on.

"Content concerned" corresponds to content requested to be distributed by the terminal. "Predetermined position" corresponds to, for example, the position specified by the distribution program.

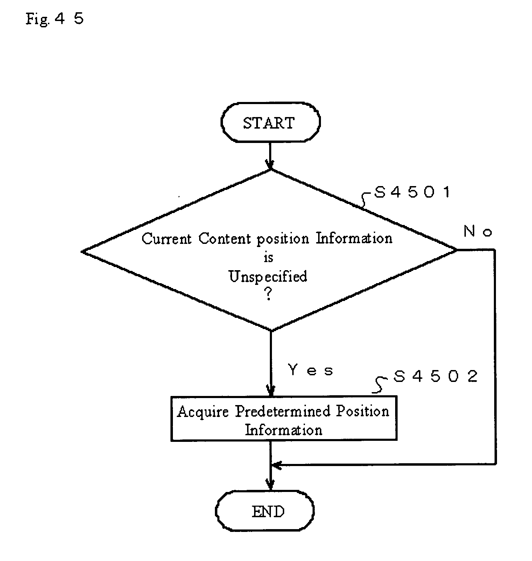

Fig. 45 is a flow chart demonstrating the operation of the server relating to the present embodiment. In step S4501, it is determined whether current content position information is unspecified. If it is unspecified, step S4502 will be processed and predetermined position information will be acquired. Although the subsequent process is not illustrated in Fig. 45, for example, distribution of content is started at the current content position or a predetermined position.

According to the present embodiment, the terminal need not transmit the distribution request signal in a perfect state and need not specify the current content position information, so that the configuration of the terminal is simplified. Moreover, in cases where the current content position information is set to unspecified, the data corresponding to current content position information is not transmitted, so that it becomes possible to reduce communication traffic.

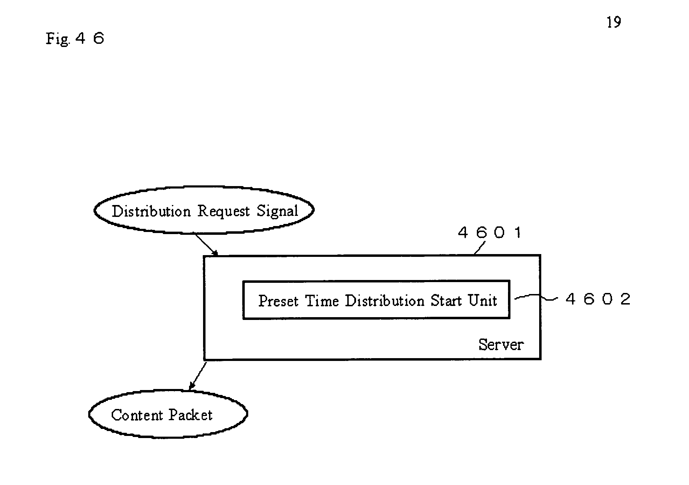

Fig. 46 is a functional block diagram of the server relating to the nineteenth embodiment of the present invention. Server 4601 comprises preset time distribution start unit 4602.

"Preset time distribution start unit" 4602 starts distribution at a preset time in cases which do not include current content position distribution start instruction information, but where the time is set to the distribution start position information.

For example, if 0:10.0 is set to the distribution start position information, preset time distribution start unit will start distribution of content at 0:10.0.

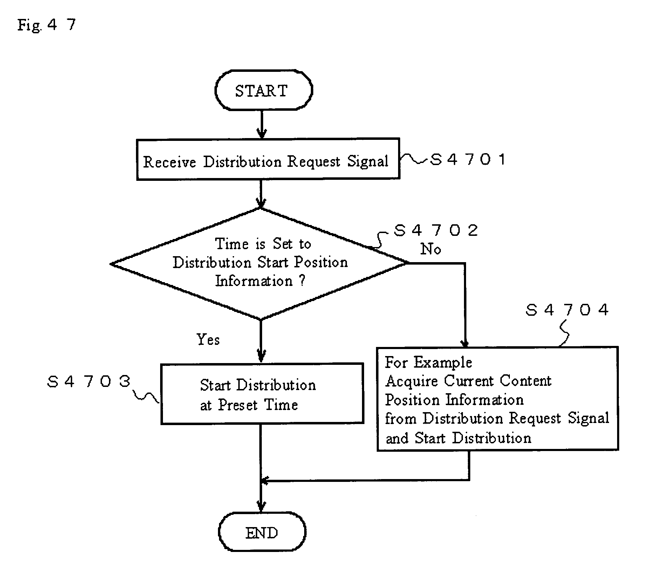

Fig. 47 is a flow chart demonstrating operation of the server relating to the present embodiment.

In step S4701, the distribution request signal is received.

In step S4702, it is determined whether time is set to the distribution start position information. If so, step S4703 will be processed and if not, step S4704 will be processed.

In step S4703, distribution starts at preset time.

In step S4704, for example, the current content position information is acquired and distribution starts at that position.

According to the present embodiment, even though the distribution request signal requests distribution from the start of the content, it becomes possible to distribute from a predetermined position on the server side.

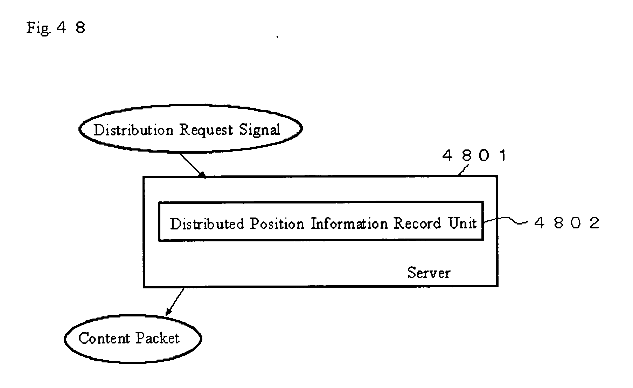

Fig. 48 is functional block diagram of server relating to the twentieth embodiment of the present invention. Server 4801 comprises distributed position information record unit 4802.

"Distributed position information record unit" 4802 sets the distributed position information to the subsequent content position information in the content packet to be distributed in cases where distributed position information record instruction information is set to distributed position information.

"Distributed position information record instruction information" corresponds to instruction information directing to record distributed position information to subsequent content position information about content packet. For example, media time in section 403 of Fig. 4 is cited as an example of distributed position record directions information. As described in the fourteenth embodiment, media time is considered as a parameter and is evaluated, so that the distributed position of the content may be acquired. In this case, the distributed position of the content acquired, not by the character string of media time, but by evaluation of a parameter such as media time. Moreover, media time itself may be considered to be a distributed position record instruction information.

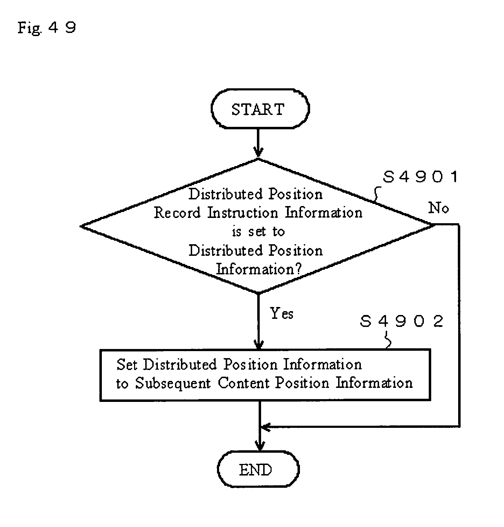

Fig. 49 is a flow chart of a server demonstrating the operation of the present embodiment. In step S4901, it is determined whether distributed position information indicates distributed position record instruction information. If so, step S4902 will be processed and if not, step S4902 will be skipped.

In step S4902, the distributed position information is set to the content position information. Note that, as described above, distributed position information need not correspond to distributed position information itself and, for example, may correspond to a result of evaluation of distributed position information.

According to the present embodiment, information indicating where content has been distributed is included in the content packet. Thereby, for example, it becomes possible to receive consecutive content of former content.

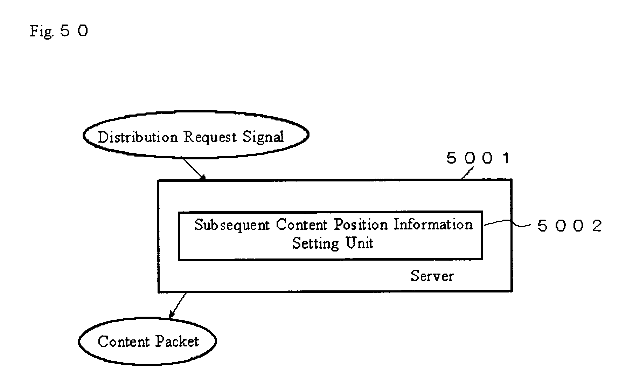

Fig. 50 illustrates a functional block diagram of the twenty-first embodiment of the present invention. Server 5001 comprises subsequent content position information setting unit 5002.

"Subsequent content position information setting unit" 5002 sets subsequent content position information of the distribution request signal to the subsequent content position information of the content packet to be distributed when distributed position information indicates subsequent content position setting instruction information.

"Subsequent content position setting instruction information" corresponds to instruction information directing the setting of the subsequent content position information of the distribution request signal to the subsequent content position information of the content packet to be distributed.

"Resume Position" indicated in section 803 of Fig. 8 is a concrete example of subsequent content position setting instruction information. By this resume position, the subsequent the content position information of the distribution request signal is set to subsequent content position information of the content packet to be distributed.

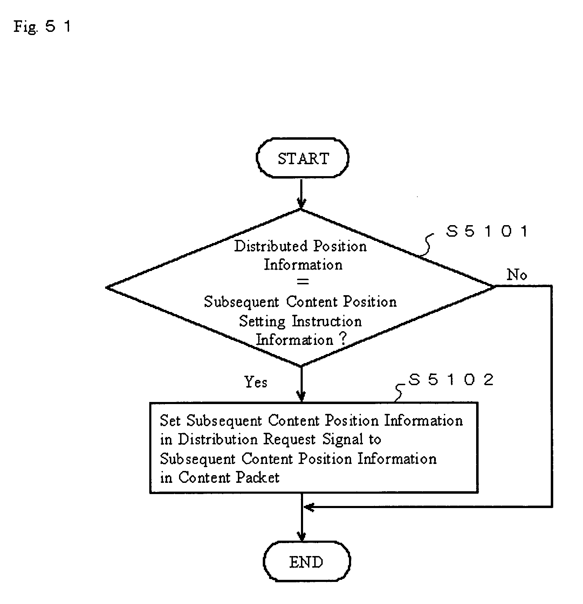

Fig. 51 is a flow chart of the operation of the server of the present embodiment. In step S5101, it is determined whether the distributed position information indicates subsequent content position setting instruction information. If so, step S5102 will be processed and if not, step S5102 will be skipped.

In step S5102, the subsequent content position information of the distribution request signal is set to the subsequent content position information of the content packet.

According to the present embodiment, the subsequent content position information of the content packet is set according to the distribution request signal. Hence, the terminal transmits the subsequent content position information to the server, so that subsequent content position information is included in the content packet. Thereby the terminal need not store subsequent content position information.

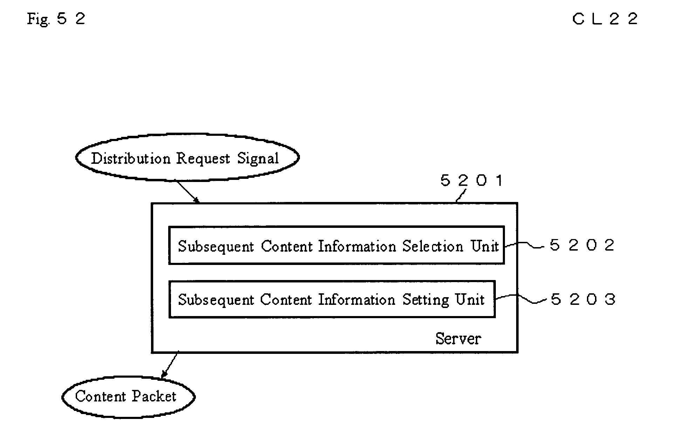

Fig. 52 is a functional block diagram of the server of the twenty-second embodiment of the present invention. Server 5201 comprises subsequent content information selection unit 5202 and subsequent content information setting unit 5203.

"Subsequent content information selection unit" 5202 selects subsequent content information to be distributed subsequently from subsequent content information comparing the distribution start position information with the position information included in the subsequent content information. Moreover, multiple subsequent content information may exist. Note that "subsequent content information to be distributed subsequently" corresponds to "subsequent content information relating to content distributed next time".

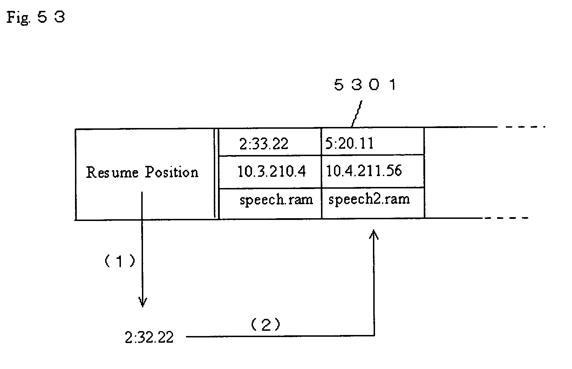

Fig. 53 illustrates a process which compares the distribution start position information with the position information included in the subsequent content information and selects the subsequent content information. (1) In cases where resume position is set to the distribution start position information, resume position is considered to be a parameter, so that the distribution start position information of the content to be distributed next time is acquired.

(2) For example, if acquired value is 2:32.22, subsequent content information 5301, which is after 2:32. 22 and closest to 2:32.22, is acquired by scanning subsequent content information.

"Subsequent content information setting unit" 5203 sets the selected subsequent content information to the subsequent content information of the content packet to be transmitted. For example, as illustrated in Fig. 53, in cases when subsequent content information 5301 is selected, 10.4.211.56 and speech2.ram will be set to the subsequent content information of the content packet.

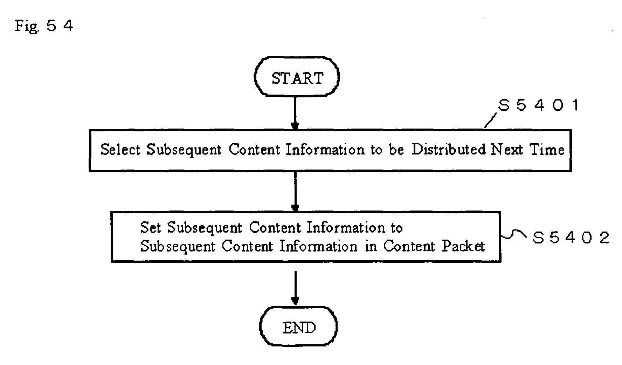

Fig. 54 is a flow chart demonstrating operation of server of the present embodiment.

In step S5401, the subsequent content information to be selected is selected in the subsequent content information setting unit.

In step S5402, subsequent content information is set to subsequent content information about content packet in subsequent content information setting unit.

According to the present embodiment, it is possible for the terminal to specify the content to be received subsequently based on the distribution start position of the content. For example, it becomes possible to change the advertisement content to be distributed subsequently according to the distribution start position of the content.

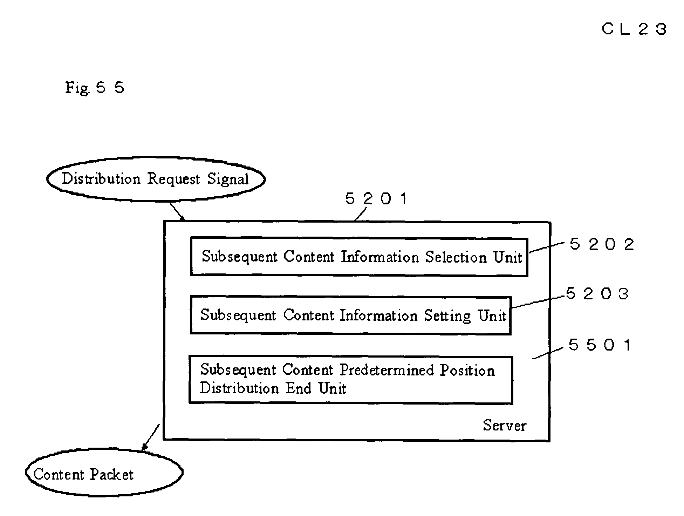

Fig. 55 is a functional block diagram of server of the twenty-third embodiment of the present invention. The server of the present embodiment is the server of the twenty-second embodiment including subsequent content predetermined position distribution end unit 5501.

"Subsequent content predetermined position distribution end unit" 5501 ends distribution at the position indicated by the position information included in the selected subsequent content information. For example, in cases where subsequent content information 5301 is selected, as illustrated in Fig. 53, the subsequent content predetermined position distribution end unit ends distribution of the content, when the content packet at 5:20.11 is distributed.

According to the present embodiment, distribution of the content ends at a predetermined position, so that it becomes possible to instruct the terminal to transmit the distribution request signal of the subsequent content. Moreover, the terminal only needs to detect the distribution end of content, thus simplifying the configuration of terminal.

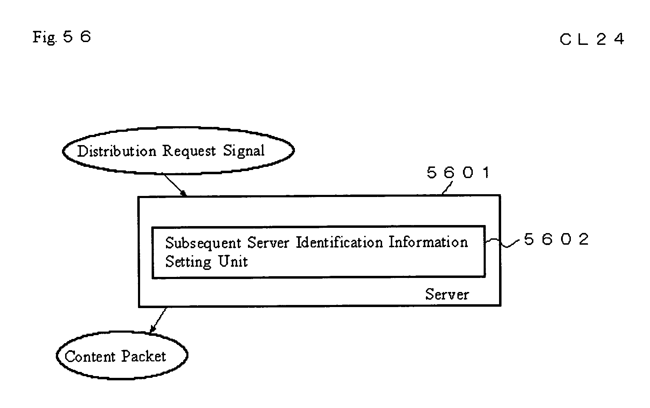

Fig. 56 is a functional block diagram of the server relating to the twenty-fourth embodiment of the present invention. Server 5601 comprises subsequent server identification information setting unit 5602.

"Subsequent server identification information setting unit" 5602 sets the subsequent server identification information of the distribution request signal to the subsequent server identification information of the content packet in cases when the subsequent server identification information included in the subsequent content information indicates the subsequent server identification information setting instruction information.

"Subsequent server identification information setting instruction information" corresponds to instruction information directing to set the subsequent server identification information of the distribution request signal to the subsequent server identification information of the content packet to be transmitted. As a specific example, return host in section 804 of Fig. 8 is cited. By this direction, "server A", the value of the server ID in subsequent content identification information unit 703 of distribution request signal 701, is set to the value of the server ID in subsequent information storage unit 903 of content packet of Fig. 9.

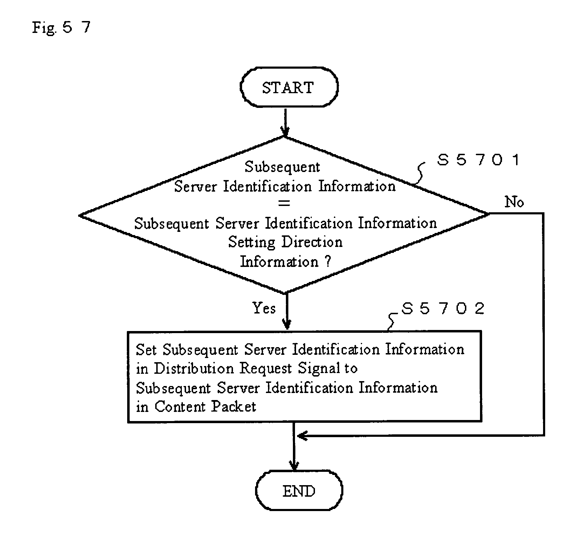

Fig. 57 is a flow chart demonstrating operation of the server of the present embodiment. In step S5701, it is determined whether the subsequent server identification information indicates the subsequent server identification information setting instruction information. If so, step S5702 will be processed and if not, step S5702 will be skipped.

In step S5702, the subsequent server identification information of the distribution request signal is set to the subsequent server identification information of the content packet.

According to the present embodiment, the subsequent server identification information of the distribution request signal is set to the subsequent server identification information of the content packet. Thereby the terminal transmits the distribution request signal to the server, so that it receives the content packet to which subsequent server identification information is set. Hence, terminal does not need to store subsequent server identification information.

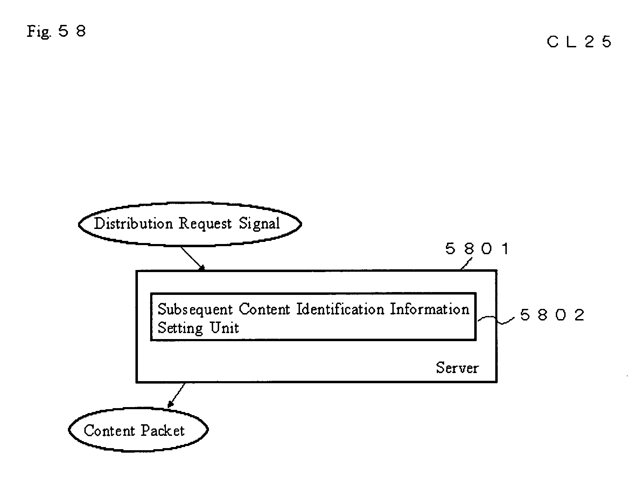

Fig. 58 is a functional block diagram of the server relating to the twenty-fifth embodiment of the present invention. Server 5801 comprises subsequent content identification information setting unit 5802.

"Subsequent content identification information setting unit" 5802 sets the subsequent content identification information of the distribution request signal to the subsequent content identification information of the content packet to be distributed when the subsequent content identification information included in the subsequent content information indicates the subsequent content identification information setting instruction information.

"Subsequent content identification information setting instruction information" corresponds to instruction information directing to set the subsequent content identification information of the distribution request signal to subsequent content identification information about content packet to be distributed. Return content in section 804 of Fig. 8 is cited as a specific example. By this direction, "movie 1", the value of the content ID in the subsequent content identification information unit 703 of distribution request signal 701, is set to the value of the content ID in subsequent information storage unit 903 of the content packet of Fig. 9.

According to the present embodiment, the subsequent content identification information of the distribution request signal is set to the subsequent content identification information of the content packet. Thereby the terminal transmits the distribution request signal to the server, so that it receives the content packet to which subsequent server identification information is set. Hence, terminal does not need to store the subsequent server identification information.

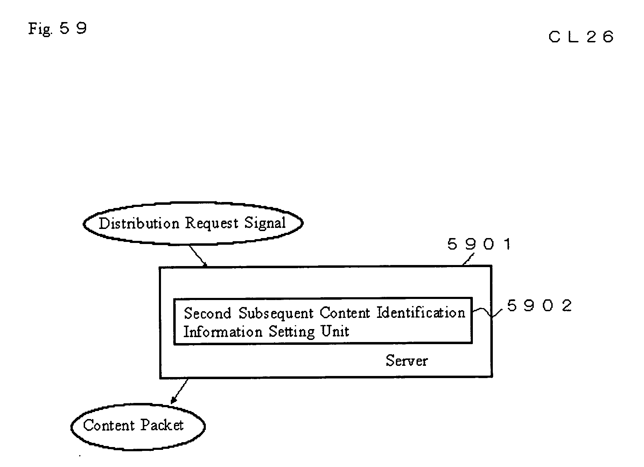

Fig. 59 illustrates a functional block diagram of the server relating to the twenty-sixth embodiment of the present invention. Server 5901 comprises the second subsequent content identification information setting unit 5902.

"Second subsequent content identification information setting unit" 5902 sets the content identification information of the content being distributed currently to the second subsequent content identification information of the content to be transmitted. For example, if the content identification information of the content being transmitted currently indicates "movie 1", "movie 1" will be set to the second subsequent content identification information. (For example, Fig. 5)

According to the present embodiment, the content identification information of the content being distributed currently is set to the second subsequent content identification information, so that it becomes possible to distribute the content being distributed currently after distribution of the subsequent content.

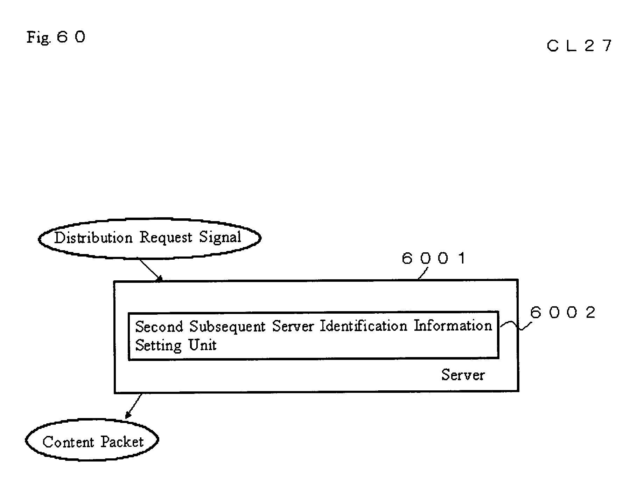

Fig. 60 is a functional block diagram of the server of the twenty-seventh embodiment of the present invention. Server 6001 comprises second subsequent server identification information setting unit 6002.

"Second subsequent server identification information setting unit" 6002 sets the server identification information of the content being distributed currently to the second subsequent server identification information about content to be transmitted. For example, if the server identification information about content being distributed currently indicates "server A", "server A" will be set to the second subsequent server identification information. (For example, Fig. 5) Note that "server identification information about content being distributed currently" corresponds to the identification information of the server distributing content concerned.

According to the present embodiment, the server identification information of the content being distributed currently is set to the second subsequent server identification information, so that it becomes possible to receive distribution of the content from the server distributing currently after distribution of the subsequent content from another server.

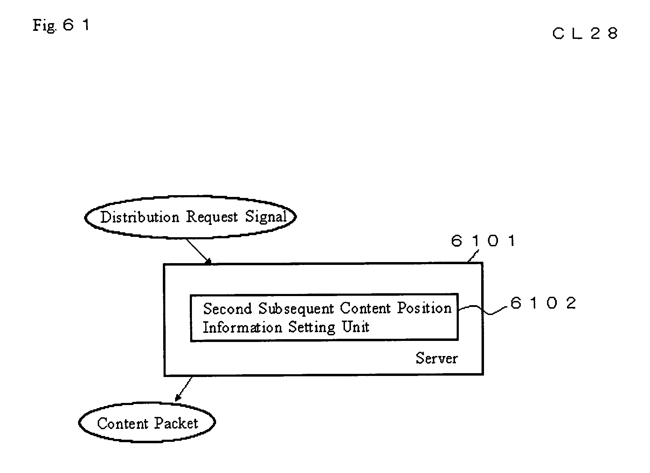

Fig. 61 is a functional block diagram of server relating to the twenty-eighth embodiment of the present invention. Server 6101 comprises the second subsequent content position information setting unit 6102.

"Second subsequent content position information setting unit" 6102 sets content position information of the content being distributed currently to the second subsequent content position information about content to be transmitted. For example, if the content position information indicates "0:10.0", "0:10.0" will be set to the second subsequent content position information.

According to the present embodiment, the content position information about content being distributed currently is set to the second subsequent content position information, so that it becomes possible to receive distribution of the content from the position where distribution stops after distribution of the subsequent content.

Moreover, from the seventeenth embodiment through the twenty-eighth embodiment may be practiced in any combination. The embodiment, a combination of these embodiments, is described by the use of Figs. 5, 9, 11, 13, 16, 18, 19 and 22.

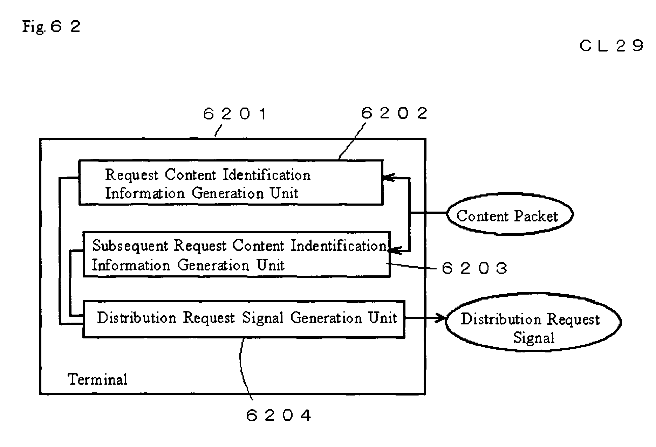

Fig. 62 is a functional block diagram of the terminal of the twenty-ninth embodiment of the present invention. Terminal 6201 comprises current request content identification information generation unit 6202, subsequent request content identification information generation unit 6203 and distribution request signal generation unit 6204.

"Current request content identification information generation unit" 6202 generates the current request content identification information based on the subsequent content identification information stored in subsequent information storage unit of the content packet distributed. "Current request content identification information" corresponds to the information for identification of the content requested to be distributed currently.

For example, current request content identification information generation unit 6202 generates the current request content identification information by extracting "movie 1" which is a value of content ID in subsequent information storage unit 903 of content packet 901 illustrated in Fig. 9. (The value of content ID in subsequent information storage unit 907 of content packet 905 may be extracted).

"Subsequent request content identification information generation unit" 6203 generates the subsequent request content identification information based on second subsequent request content identification information stored in the second subsequent information storage unit of content packet distributed. "Subsequent request content identification information" corresponds to information for identification of the content requested to be distributed subsequent to current content.

For example, subsequent request content identification information generation unit 6203 generates subsequent request content identification information by extracting "advertisement 1" which is a value of the content ID in second subsequent information storage unit 904 of content packet 901 illustrated in Fig. 9. (The value of content ID in the second subsequent information storage unit 908 of the content packet 905 may be extracted).

"Distribution request signal generation unit" 6204 generates the distribution request signal comprising the current request content identification information and the subsequent request content identification information.

For example, distribution request signal generation unit 6204, as distribution request signal 1001 illustrated in Fig. 10, generates the distribution request signal wherein "movie 1" is set to the content ID in current content identification information unit 1002 and "advertisement 1" is set to the content ID in subsequent content identification information unit 1003.

According to the present embodiment, it becomes possible to generate identification information of the current content and the subsequent content in the distribution request signal to be transmitted from the terminal based on the identification information of the subsequent content and the second subsequent content indicated in content packet transmitted to the terminal. Thereby, for example, it becomes possible to specify the subsequent content and the second subsequent content on the server side distributing content packet.

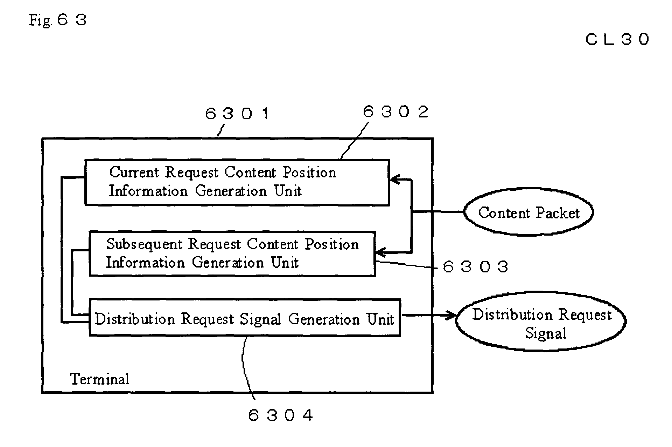

Fig. 63 is a functional block diagram of terminal of the thirtieth embodiment of the present invention. Terminal 6301 comprises current request content position information generation unit 6302, subsequent request content position information generation unit 6303 and distribution request signal generation unit 6304.

"Current request content position information generation unit" 6302 generates the current request content position information based on the subsequent content position information stored in the subsequent information storage unit of the content packet distributed. "Current request content position information" corresponds to information indicating the position in the content requested to be distributed currently.

For example, current request content position information generation unit 6302 generates the current request content position information by extracting "0:01.0" which is a value of position in second subsequent information storage unit 908 of content packet 905 illustrated in Fig. 9.

"Distribution request signal generation unit" 6304 generates the distribution request signal comprising the current request content position information and the subsequent content position information.

For example, distribution request signal generation unit 6304, as distribution request signal 1001 illustrated in Fig. 10, generates the distribution request signal wherein "0:15.0" is set to the value of the position in current content identification information unit 1002 and "0:01.0" is set to the value of position in the subsequent content identification information unit 1003.

According to the present embodiment, it becomes possible to generate the position information of the current content and the subsequent content in the distribution request signal to be transmitted from the terminal based on the position information of the subsequent content and the second subsequent content indicated in content packet transmitted to the terminal. Thereby, for example, it becomes possible to specify the position of the subsequent content and the second subsequent content on the server side distributing the content packet.

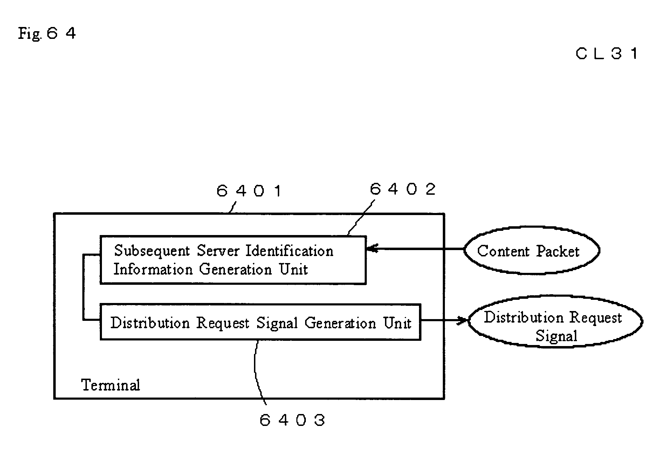

Fig. 64 is a functional block diagram of terminal relating to the thirty-first embodiment of the present invention. Terminal 6401 comprises the subsequent request server identification information generation unit 6402 and distribution request signal generation unit 6303.

"Subsequent request server identification information generation unit" 6402 generates the subsequent request server identification information based on the second subsequent request server identification information stored in the second subsequent information storage unit of the content packet distributed. "Subsequent request server identification information" corresponds to the information for the identification of the server requested to distribute subsequent to this time.

For example, subsequent request server identification information generation unit 6402 generates the current request content position information by extracting "0:01.0" which is the value of the position in second subsequent information storage unit 908 of the content packet 905 illustrated in Fig. 9.

"Distribution request signal generation unit" 6403 generates the distribution request signal comprising the subsequent request server identification information.

For example, distribution request signal generation unit 6403, as distribution request signal 1001 illustrated in Fig. 10, generates the distribution request signal wherein "server A" is set to server ID in subsequent content identification information 1003.

According to the present embodiment, the terminal only needs to generate the subsequent request server identification information based on the subsequent server identification information included in the content packet distributed, thus simplifying the configuration.

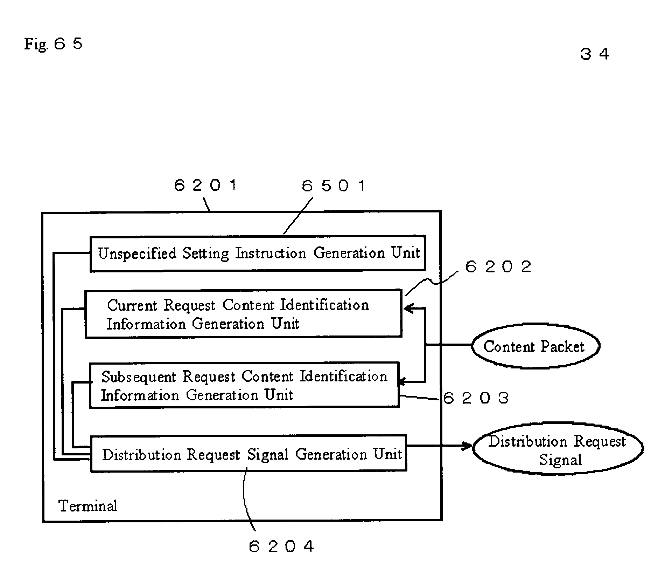

Fig. 65 is a functional block diagram of the terminal relating to the thirty-second embodiment of the present invention. The terminal relating to the present embodiment is a terminal, described in any of the twenty-ninth, the thirtieth or the thirty-first embodiments, which comprises unspecified setting instruction generation unit. The terminal whose functional block diagram is illustrated in Fig. 65 is a terminal of the twenty-ninth embodiment which comprises unspecified setting instruction generation unit 6501.

"Unspecified setting instruction generation unit" generates an unspecified setting instruction to the distribution request signal generation unit. "Unspecified setting instruction" corresponds to an instruction instructing to set (A) subsequent request content identification information, (B) subsequent request server identification information, and (C) current content position information to information meaning unspecified. Note that, for example, NULL is cited as "information meaning unspecified". Moreover, in cases where the distribution request signal includes a flag indicating unspecified, setting the flag corresponds to setting "information meaning unspecified".

For example, it may be considered that the unspecified information setting instruction is generated to the distribution request signal generation unit, so that value of (A) content ID, (B) server ID, and (C) position indicate NULL.

According to the present embodiment, it becomes possible to set the information about the subsequent content of the first distribution request signal transmitted from the terminal to unspecified, so that the server receiving distribution request signal can detect that the distribution request signal transmitted is the first one.

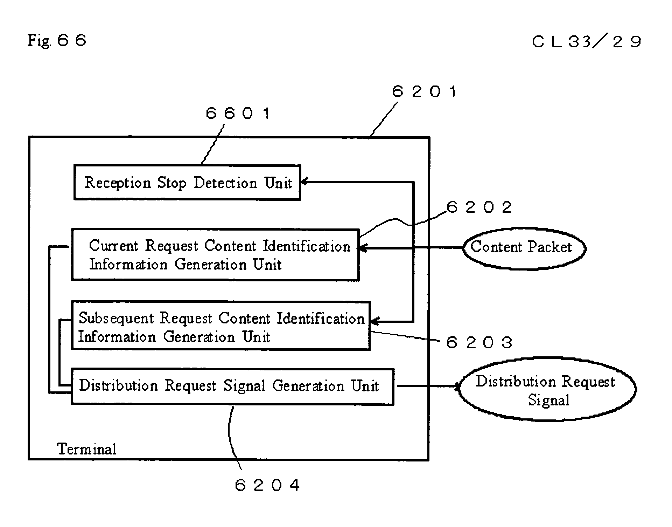

Fig. 66 is a functional block diagram of the terminal of the thirty-third embodiment of the present invention. The terminal relating to the present embodiment is a terminal, described in any of the twenty-ninth, the thirtieth or the thirty-first embodiments, which includes a reception stop detection unit. The terminal whose functional block diagram is illustrated in Fig. 66 is a terminal of the twenty-ninth embodiment which comprises reception stop detection unit 6601.

"Reception stop detection unit" 6601 detects the end of reception of the content packet to be distributed and interruption of reception by congestion. Note that "congestion" is to be considered as an example of reasons for receiving interruption of content packet and not restrictive. For example, interruption on the network between the server and the terminal and interruption of the server are cited as reasons for interruption of reception of the content packet.

The reception stop detection unit, for example, as described with respect to Fig. 6, detects an interruption in reception when queue 601 is full and thereafter detects when the content of queue 601 decreases below a threshold of the distribution request.

According to the present embodiment, interruption of reception is detected, so that, for example, it becomes possible to notify the user whose reception is interrupted, to take appropriate steps.

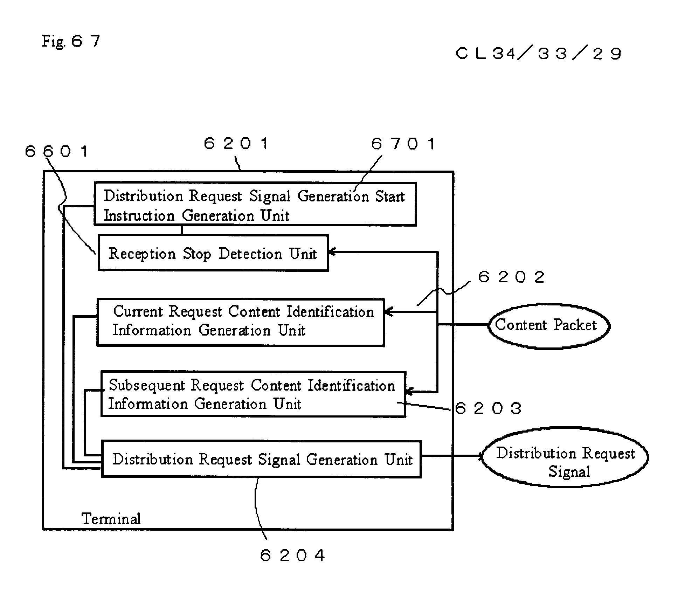

Fig. 67 is a functional block diagram of the terminal of the thirty-fourth embodiment of the present invention. The terminal of the present embodiment is the terminal relating to the thirty-third embodiment which comprises the distribution request signal generation start instruction generation unit. Therefore, Fig. 67 is a figure wherein distribution request signal generation starts instruction generation unit 6701 is added to Fig. 66.

"Distribution request signal generation start instruction generation unit" generates a distribution request signal generation start instruction based on the content packet received just before the end of reception or interruption of reception to the distribution request signal generation unit when the end of reception or interruption of reception is detected by reception stop detection unit 6601. "Distribution request signal generation start instruction" corresponds to the instruction to start generation of the distribution request signal.

For example, in Fig. 5, distribution request signal generation start instruction generation unit generates the distribution request signal generation start instruction to generate the distribution request signal based on information stored in subsequent information storage unit 507 and second subsequent information storage unit to distribution request signal generation unit 504 of content packet 505 to the distribution request signal generation unit. Thereby, for example, distribution request signal 701 illustrated in Fig. 7 is generated and transmitted.

According to the present embodiment, the distribution request signal requesting the subsequent content is generated according to the end of reception or interruption of reception, so that it becomes possible to avoid disruption in the playback of the content.

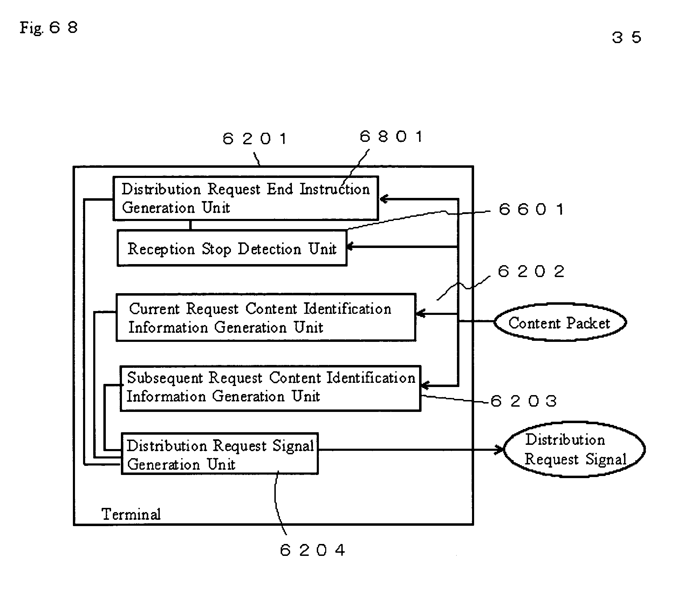

Fig. 68 is a functional block diagram of the terminal of the thirty-fifth embodiment of the present invention. The terminal of the present embodiment is a terminal of the thirty-third embodiment which comprises a distribution request end instruction generation unit. Therefore, Fig. 68 is a figure wherein distribution request end instruction generation unit 6801 is added to Fig. 66.

"Distribution request end instruction generation unit" generates the distribution request end instruction to the distribution request signal generation unit, when the end of reception or interruption of reception is detected by reception stop detection unit 6601 and the subsequent content identification information and the subsequent server identification information of content packet received just before the end of reception indicate unspecified. "Distribution request end instruction" corresponds to an instruction to stop generation of the distribution request signal and to end the distribution request.

The case that content packet 1901 and 1905 illustrated in Fig. 19 are received by the terminal is an example of case that "subsequent content identification information and subsequent server identification information of the content packet indicate unspecified"

According to the present embodiment, the distribution request signal is generated in cases when the subsequent content identification information and subsequent server identification information about content packet indicate unspecified, so that it becomes possible to stop generation of the distribution request signal which is unnecessary..

The terminal of the thirty-sixth embodiment of the present invention is a terminal wherein the distribution request signal generation unit generates the distribution request signal to be transmitted to the server indicated by the subsequent server identification information included in the content packet received just before the end of reception or interruption of reception when the end of reception or interruption of reception is detected by the reception stop detection unit of the terminal of the thirty-third embodiment.

A specific example is illustrated in Fig. 5 and 7. In Fig. 5, when content packet 505 is the last content packet received by the terminal, "server B" which is value of server ID stored in subsequent information storage unit 507 is extracted. Thereby, in Fig. 7, distribution request signal 701 is transmitted to server B.

According to the present embodiment, the distribution request signal is transmitted to the server specified by the content packet, so that it becomes possible to control the destination of the distribution request signal to be transmitted subsequently on the server side distributing the content packet.

Moreover, the twenty-ninth embodiment through the thirty-sixth embodiment may be practiced in any combination. The embodiment, a combination of these embodiments, is described by the use of Figs. 3, 7, 10, 12, 15, 17 and 21.

According to the present invention, as described hereinbefore, it becomes possible to share time of content distribution to a terminal by multiple servers connected at a distance on the network. Thereby it becomes possible to avoid concentration of access from a terminal to a specific server. Moreover, it becomes possible to provide system comprised of a server and a terminal for load-sharing.

Moreover, according to the present invention, when reception is interrupted between a server and a terminal having the same content connected at a distance on the network, the terminal can change to another server distributing content. Thereby it becomes possible to play back content sequentially. Moreover, it becomes possible to improve the quality of content distribution and to provide content distribution services with stability.

## Claims

1. A content packet comprising;
a content composition information storage unit storing content composition information for composing a first content to be distributed;
a subsequent information storage unit storing subsequent content identification information for identifying a second content to be distributed after said first content.

2. A content packet comprising;
a content composition information storage unit storing content composition information for composing a first content to be distributed,
a second subsequent information storage unit storing second subsequent content identification information for identifying a second content to be distributed after said first content.

3. A content packet comprising;
a content composition information storage unit storing content composition information for composing a first content to be distributed,
a subsequent information storage unit storing subsequent content identification information identifying a first subsequent content distributed after said first content,
a second subsequent information storage unit storing second subsequent content identification information identifying a second subsequent content to be distributed after said first subsequent content.

4. A content packet comprising;
a content composition information storage unit storing content composition information for composing a first content distributed,
a subsequent information storage unit storing subsequent content position information indicating a distribution start position in a second content to be distributed after said first content.

5. A content packet comprising;
a content composition information storage unit storing content composition information for composing a first content to be distributed,
a second subsequent information storage unit storing second subsequent content position information indicating a distribution starting position in a second subsequent content to be distributed to said first content.

6. A content packet comprising;
a content composition information storage unit storing content composition information for composing a first content to be distributed,
a subsequent information storage unit storing first subsequent content position information indicating a starting position of a first subsequent content to be distributed after said first content,
a second subsequent information storage unit storing second subsequent content position information indicating a distribution starting position in a second subsequent content to be distributed after subsequent said content.

7. A content packet comprising;
a content composition information storage unit storing content composition information for composing a content to be distributed,
a subsequent information storage unit storing subsequent server identification information for identifying the subsequent server to which a terminal receiving the content packet connects after connecting to a server distributing the content packet.

8. A content packet comprising;
a content composition information storage unit storing content composition information for composing a content to be distributed,
a second subsequent information storage unit storing second subsequent server identification information for identifying the second subsequent server to which a terminal receiving the content packet connects after connecting to a server distributing the content packet.

9. A content packet comprising;
a content composition information storage unit storing content composition information for composing a content to be distributed,
a subsequent information storage unit storing subsequent server identification information for identifying the subsequent server to which a terminal receiving the content packet connects after connecting a server distributing the content packet,
a second subsequent information storage unit storing second subsequent server identification information for identifying the second subsequent server to which a terminal receiving the content packet connects after connecting to a server distributing the content packet.

10. A distribution request signal comprising;
current content identification information for identifying a current content requested to be distributed currently,
subsequent content identification information for identifying a subsequent content requested to be distributed after said current content.

11. A distribution request signal comprising;
current content position information indicating a distribution start position in the current content to which distribution is requested currently,
subsequent content position information indicating a distribution start position in the subsequent content to which distribution is requested after said current content.

12. A distribution request signal comprising subsequent server identification information for identifying the subsequent server to which the terminal receiving a content packet connects after connecting the server distributing said content packet.

13. A distribution program, wherein a server generates content packets comprising a content composition information storage unit for storing content composition information for composing content according to a distribution program, comprising a distribution start position information storage unit for storing distribution start position information.

14. A distribution program, wherein a server generates content packets comprising a content composition information storage unit for storing content composition information for composing content according to a distribution program, comprising a distributed position information storage unit for storing distributed position information.

15. A distribution program, wherein a server generates content packets comprising a content composition information storage unit for storing content composition information for composing content according to a distribution program, comprising a subsequent content information storage unit for storing subsequent content information on a subsequent content to which said terminal requests after said current content.

16. The distribution program according to claim 15 further comprising;
content end position information indicating a distribution end position of a content composed of content composition information stored in said content packet composition information storage unit,
subsequent content distribution server identification information for identifying the content distribution server distributing said subsequent content,
subsequent content identification information for identifying said subsequent content.

17. A server comprising a distribution start position information acquisition unit acquiring said subsequent content position information from distribution request signal when current content position distribution start instruction information starting distribution at the position indicated by current content information in a distribution request signal is set to distribution start position information.

18. A server comprising a predetermined position distribution start unit starting distribution at the predetermined position in a content when said current content position information acquired by said distribution start position information acquisition unit is set to unspecified.

19. A server comprising a setting time distribution start unit starting distribution at a preset time when a time is set to a distribution start position information.

20. A server comprising a distributed position information record unit recording said distributed position information about subsequent content information in a content packet to be distributed when distributed position record instruction information, setting distributed position information to subsequent content position information in a content to be distributed, is set to distributed position information.

21. A server comprising a subsequent content position information setting unit setting a subsequent content information in a distribution request signal to subsequent content information in a content packet distributed when subsequent content position setting instruction information, setting subsequent content information in a distribution request signal to subsequent content information in a content packet, is set to distributed position information.

22. A server comprising;
a subsequent content information selection unit for selecting a subsequent content to be distributed next time by comparing a distribution start position information with positional information in a subsequent content information when multiple subsequent content information exists,
a subsequent content information setting unit setting said subsequent information selected to subsequent content information in a content packet to be distributed.

23. The server according to claim 22 comprising subsequent content predetermined position distribution end instruction generation unit for generating a subsequent content predetermined position distribution end instruction, instructing stop distribution at the predetermined position indicated by position information included in said selected subsequent content information.

24. A server comprising a subsequent server identification information setting unit for setting subsequent server identification information in a distribution request signal to subsequent server identification information in a content packet to be transmitted when subsequent server identification information setting instruction information, setting subsequent server identification information in a distribution request to subsequent server information in a content packet to be transmitted, is set to a subsequent server information contained in subsequent content information.

25. A server comprising a subsequent content identification information setting unit for setting subsequent content identification information in a distribution request signal to subsequent content identification information in a content packet to be transmitted when subsequent content identification information setting instruction information, directing to set subsequent content identification information in distribution request to subsequent content information in a content packet to be transmitted, is set to subsequent content information contained in subsequent content information.

26. A server comprising a second subsequent content identification information setting unit for setting a content identification information being distributed to second subsequent content identification information in a content packet to be distributed.

27. A server comprising a second subsequent server identification information setting unit for setting server identification information being distributed to second subsequent content identification information in a content packet to be distributed.

28. A server comprising a second subsequent content position information setting unit for setting server identification information being distributed to second subsequent content identification information in a content packet to be distributed.

29. A terminal comprising;
a current request content identification information generation unit for generating current request content identification information for identifying a first content requesting distribution currently based on subsequent content identification information stored in said subsequent information storage unit in a content packet distributed,
a subsequent request content identification information generation unit for generating subsequent request content identification information for identifying a second content requesting distribution subsequently based on second subsequent content identification information stored in said second subsequent information storage unit in a content packet distributed,
a distribution request signal generation unit for generating a distribution request signal including said current request content identification information and said subsequent request content identification information.

30. A terminal comprising;
a current request content position information generation unit for generating current request content position information indicating a position to start distributing a first content requesting distribution currently based on subsequent request content position information stored in said subsequent information storage unit in a content packet distributed,
a subsequent request content position information generation unit generating subsequent request content position information indicating a position to start distributing a second content requesting distribution subsequently based on second subsequent request content position information stored in said second subsequent information storage unit in a content packet distributed,
a distribution request signal generation unit generating a distribution request signal including said current request content position information and said subsequent request content position information.

31. A terminal comprising;
a subsequent request server position information generation unit for generating subsequent request server identification information for identifying the distribution server requesting distribution subsequently based on second subsequent server identification information stored in said second subsequent information storage unit in a content packet distributed,
a distribution request signal generation unit for generating a distribution request signal including said subsequent request server identification information.

32. A terminal according to any one of claims 29 to 31 comprising an unspecified setting instruction generation unit generating an unspecified setting instruction to a distribution request signal generation unit to set subsequent request content identification information, subsequent request server identification information, and current request content position information in a distribution request signal transmitted first to unspecified information.

33. A terminal according to any one of claims 29 to 31 comprising a reception stop detection unit detecting end of reception of content packet or interruption of reception of the content packet.

34. A terminal according to claim 33 comprising a distribution request signal generation start instruction generation unit for generating distribution request signal generation start instruction to a distribution request signal generation unit to start generating said distribution request signal based on the content packet received immediately prior to an end of reception or interruption of reception when detected by reception stop detection unit.

35. A terminal according to claim 33 comprising a distribution request end instruction generation unit for generating distribution request end instruction to a distribution request signal generation unit to stop generating a distribution request signal and end distribution request when an end of reception or an interruption of reception is detected by reception stop detection unit and subsequent content identification information and subsequent server identification information are unspecified.

36. A terminal according to claim 33 wherein a distribution request signal generation unit generates a distribution request signal to be transmitted to the server indicated by subsequent server identification information included in a content packet received immediately prior to an end of reception or interruption of reception when detected by reception stop detection unit.
